# FASCICULE DE BREVET EUROPEEN

(11) **EP 3 995 857 B1**
(45) Date de publication et mention de la délivrance du brevet: **31.05.2023**
(21) Numéro de dépôt: 21205387.0
(22) Date de dépôt: 28.10.2021
(51) Int. Cl.: G01S 17/88, G01S 7/484, G01N 21/3504, G01N 21/39, G01N 21/31, G01N 21/17

(54) **SYSTÈME LIDAR POUR DES MESURES D'ABSORPTION DIFFENTIELLE ET DE DISTANCE D'ARRIÈRE-PLAN**
LIDAR-SYSTEM FÜR DIFFERENTIELLE ABSORPTIONS- UND HINTERGRUNDABSTANDSMESSUNGEN
LIDAR SYSTEM FOR MEASURING DIFFERENTIAL ABSORPTION AND BACKGROUND DISTANCE

(30) Priorité: 06.11.2020 FR 2011430
(43) Date de publication de la demande: 11.05.2022
(73) Titulaire: Office National d'Etudes et de Recherches Aérospatiales, 91120 Palaiseau (FR)
(72) Inventeur: LOMBARD, Laurent, 91120 PALAISEAU (FR); DURECU, Anne, 91120 PALAISEAU (FR); CEZARD, Nicolas, 91120 PALAISEAU (FR); GUSTAVE, François, 91120 PALAISEAU (FR); CANAT, Guillaume, 91120 PALAISEAU (FR)
(74) Mandataire: Plasseraud IP

(56) Documents cités:
- EP-A1- 1 943 541
- FR-A1- 3 009 655
- US-A1- 2010 131 207

## Description

### Domaine technique

La présente description concerne un système LIDAR qui est adapté pour effectuer des mesures d'absorption différentielle et de distance d'arrière-plan. Elle concerne aussi un procédé de mesure d'une quantité d'un composé chimique, qui utilise un tel système.

### Technique antérieure

Il est connu d'utiliser des mesures d'absorption différentielle pour évaluer la quantité d'un composé chimique qui est contenue dans une zone de mesure. Pour cela, l'absorption d'un rayonnement qui est émis en direction de la zone de mesure est mesurée pour une première fréquence du rayonnement qui ne correspond pas à une bande d'absorption du composé chimique, et aussi pour une seconde fréquence du rayonnement qui correspond quant à elle à une bande d'absorption du composé chimique. Il est donc nécessaire d'émettre du rayonnement aux deux fréquences en direction de la zone de mesure, et de comparer les niveaux d'absorption qui sont mesurés pour chacune d'elles. Une telle méthode de mesure est couramment désignée par IPDA, pour «Integrated Path Differential-Absorption» en anglais, ou absorption différentielle intégrée sur un trajet. Elle nécessite de connaître en outre la profondeur de la zone de mesure, telle que, par exemple, la distance à laquelle se trouve un obstacle qui est présent en arrière-plan de cette zone de mesure.

La réalisation de telles mesures IPDA en utilisant un système LIDAR est avantageuse, notamment à cause de la sensibilité de détection et de la capacité d'analyse des signaux de détection que procure un système de ce type. C'est alors un enjeu important de pouvoir utiliser des systèmes LIDAR qui sont réalisés à base de fibres optiques, du fait de l'encombrement et du poids réduits de tels systèmes, de leur meilleur rendement énergétique, et de leur robustesse par rapport à des risques de perte d'alignement entre les composants optiques qui les composent.

Néanmoins, les mesures IPDA nécessitent de satisfaire les exigences suivantes :
- au moins deux rayonnements doivent pouvoir être émis avec des valeurs différentes de fréquence optique, suffisamment rapidement l'un après l'autre par rapport à des variations qui peuvent affecter le contenu de la zone de mesure. Plus précisément, des impulsions des deux rayonnements doivent être émises avec une fréquence de répétition qui est suffisamment élevée par rapport aux variations du contenu de la zone de mesure, et pour permettre l'analyse des signaux de détection, par exemple avec une fréquence de répétition qui est supérieure à 1 kHz (kilohertz) ;
- les deux rayonnements, celui en dehors des bandes d'absorption du composé chimique objet de la mesure, et celui qui correspond à l'une de ses bandes d'absorption, doivent être émis avec des énergies respectives suffisantes ;
- celui des rayonnements qui correspond à l'une des bandes d'absorption du composé chimique doit présenter une finesse spectrale suffisante, afin de fournir une précision suffisante lors de la détermination de l'absorption par le composé chimique. En particulier, il peut être nécessaire que cette largeur spectrale du rayonnement qui correspond à une des bandes d'absorption du composé chimique soit inférieure à 100 MHz (mégahertz), lorsque la longueur d'onde centrale de ce rayonnement est de l'ordre de 1,6 µm (micromètre) ; et
- la mesure de distance d'éloignement pour obstacle d'arrière-plan, par caractérisation du temps de vol, nécessite d'utiliser des impulsions de rayonnement qui soient assez courtes, typiquement avec des durées individuelles qui sont inférieures à environ 100 ns (nanoseconde).

Mais le phénomène bien connu de la diffusion Brillouin stimulée qui se produit dans les fibres optiques, limite la puissance-crête des impulsions de rayonnement qui peuvent être émises par les systèmes LIDAR réalisés à base de fibres optiques. Il en résulte une limitation sur la distance maximale de portée de ces systèmes LIDAR à fibres optiques. Le document de l'art antérieur FR 3 009 655 divulgue un émetteur laser à impulsions, pouvant émettre des impulsions à plusieurs longueur d'onde, apte à être mis en oeuvre dans un lidar à absorption différentielle.

### Problème technique

Compte tenu de ces contraintes, un but de la présente invention est de proposer un nouveau système LIDAR qui permette à la fois d'effectuer des mesures IPDA et de déterminer la distance d'éloignement d'un obstacle qui est présent en arrière-plan de la zone de mesure, et qui puisse être réalisé à base de fibres optiques.

Plus particulièrement, l'invention a pour but de proposer un tel système LIDAR qui est réalisé en utilisant au moins une fibre optique pour transmettre les rayonnements émis, mais pour lequel la limitation en puissance-crête qui est provoquée par la diffusion Brillouin stimulée est repoussée ou évitée.

### Résumé de l'invention

Pour atteindre ce but ou un autre, un premier aspect de l'invention propose un système LIDAR qui est adapté pour effectuer des mesures d'absorption différentielle entre deux fréquences optiques distinctes, et des mesures de distance d'éloignement d'un obstacle qui est présent en arrière-plan d'une zone de mesure où se produit l'absorption. Ce système LIDAR de l'invention comprend :
- un ensemble source laser, qui est capable de produire des rayonnements à l'une et à l'autre des deux fréquences optiques ;
- des moyens de modulation d'intensité, qui sont adaptés pour appliquer à chaque rayonnement une forme d'enveloppe d'impulsion, y compris une durée d'impulsion et une valeur de puissance optique d'impulsion ; et
- un contrôleur d'émission, qui est adapté pour commander les moyens de modulation d'intensité.

Dans le cadre de l'invention, on entend par puissance optique d'impulsion une valeur qui caractérise l'intensité de chaque impulsion, cette valeur pouvant correspondre à une puissance-crête de l'impulsion, ou une puissance moyenne qui est évaluée sur toute la durée de l'impulsion, étant entendu que la valeur de puissance-crête et la valeur de puissance moyenne sont croissantes l'une en fonction de l'autre à durée et forme d'impulsion constantes.

Selon l'invention, le système LIDAR est adapté de sorte que, lors d'un fonctionnement de ce système LIDAR, il émette dans une direction-cible selon laquelle une mesure d'absorption différentielle et une mesure de la distance d'éloignement de l'obstacle d'arrière-plan sont à réaliser, une séquence d'émission de rayonnement qui comprend :
- des premiers intervalles de temps pendant lesquels l'émission de rayonnement est située spectralement à une première des deux fréquences optiques, avec une première largeur spectrale, une première durée d'impulsion et une première valeur de puissance optique d'impulsion ; et
- des seconds intervalles de temps pendant lesquels l'émission de rayonnement est située spectralement à la seconde des deux fréquences optiques, avec une seconde largeur spectrale, une seconde durée d'impulsion et une seconde valeur de puissance optique d'impulsion.

Les premiers et seconds intervalles de temps peuvent former une succession quelconque dans la séquence d'émission de rayonnement, avec un nombre quelconque de premiers intervalles de temps entre deux seconds intervalles de temps, et vice-versa. Alternativement ou en combinaison, la séquence d'émission de rayonnement peut comprendre un nombre quelconque d'impulsions situées autour de la première fréquence optique entre deux impulsions situées autour de la seconde fréquence optique, et vice-versa.

En outre, la séquence d'émission de rayonnement possède les caractéristiques suivantes :
les première et seconde largeurs spectrales sont telles que l'émission de rayonnement pendant les premiers intervalles de temps et pendant les seconds intervalles de temps corresponde à des intervalles spectraux qui sont disjoints, la première largeur spectrale étant supérieure à la seconde largeur spectrale,
la première valeur de puissance optique d'impulsion est supérieure à la seconde valeur de puissance optique d'impulsion, et
la première durée d'impulsion étant plus courte que la seconde durée d'impulsion.

Un tel système LIDAR peut être réalisé à base de fibres optiques, et notamment son ensemble de source laser peut être du type MOPFA, pour «Master Oscillator Power Fiber Amplifier» ou amplificateur fibré de puissance d'un oscillateur maître. Pour ce type MOPFA de systèmes LIDAR, des impulsions de rayonnement qui possèdent les largeurs spectrales voulues et sont modulées selon les formes d'enveloppe voulues, et qui sont séparées entre impulsions successives, sont d'abord produites, puis ces impulsions sont amplifiées avant d'être émises vers l'extérieur.

Grâce à la première largeur spectrale qui est supérieure à la seconde largeur spectrale, la première valeur de puissance optique d'impulsion peut être choisie élevée ou très élevée sans que l'effet de diffusion Brillouin stimulée qui apparaîtrait dans des fibres optiques utilisées pour réaliser un tel système LIDAR, ne perturbe le fonctionnement ni l'utilisation de ce système.

Pour une utilisation de mesure IPDA, l'émission de rayonnement pendant les premiers intervalles de temps est à choisir en dehors des bandes d'absorption du composé chimique qui est concerné par les mesures. Cette émission de rayonnement pendant les premiers intervalles de temps est utilisée en outre pour estimer la distance d'éloignement de l'obstacle qui est présent en arrière-plan de la zone de mesure. Cette mesure télémétrique procède par détermination du temps de vol des impulsions de rayonnement qui sont émises pendant les premiers intervalles de temps, pour le trajet d'aller-retour entre le système LIDAR et l'obstacle d'arrière-plan. Pendant ces premiers intervalles de temps, la puissance optique d'impulsion élevée, permise par la largeur spectrale supérieure, et la durée d'impulsion plus courte permettent une précision supérieure dans l'estimation de la distance d'éloignement de l'obstacle d'arrière-plan. L'émission de rayonnement pendant les seconds intervalles de temps est à choisir dans l'une des bandes d'absorption du composé chimique. Pendant les seconds intervalles de temps, la largeur spectrale inférieure des impulsions procure une précision supérieure dans l'estimation de la quantité du composé chimique. La quantité du composé chimique est estimée à partir du rapport d'absorption qui est déterminé par le système LIDAR, entre les rayonnements émis pendant les seconds intervalles de temps autour de la seconde fréquence optique et ceux émis pendant les premiers intervalles de temps autour de la première fréquence optique, et compte tenu de la valeur estimée pour la distance d'éloignement de l'obstacle d'arrière-plan.

Préférablement, l'une ou plusieurs des caractéristiques suivantes peut (peuvent) être sélectionnées par le contrôleur d'émission :
- une fréquence de répétition de la séquence d'émission de rayonnement peut être comprise entre 1 kHz et 50 kHz ;
- les premiers intervalles de temps peuvent avoir une durée individuelle comprise entre 10 ns et 200 ns, de préférence entre 50 ns et 100 ns ;
- les seconds intervalles de temps peuvent avoir une durée individuelle comprise entre 0,1 µs (microseconde) et 10 µs, de préférence entre 0,5 µs et 5 µs ;
- la première largeur spectrale du rayonnement qui est émis par le système LIDAR dans la zone de mesure, pendant les premiers intervalles de temps, peut être comprise entre 100 MHz et 2000 MHz, de préférence entre 500 MHz et 1000 MHz ; et
- la seconde largeur spectrale du rayonnement qui est émis par le système LIDAR dans la zone de mesure, pendant les seconds intervalles de temps, peut être comprise entre 10 MHz et 200 MHz, de préférence entre 50 MHz et 100 MHz.

Enfin, l'ensemble source laser peut être adapté pour que le rayonnement qui est émis par le système LIDAR dans la zone de mesure ait des valeurs de première et seconde fréquence optique, respectivement pendant les premiers et seconds intervalles de temps, qui correspondent à des longueurs d'onde comprises entre 1,3 µm et 1,8 µm, notamment entre 1,5 µm et 1,6 µm, ou qui sont situées autour de 2 µm. De tels domaines de longueur d'onde sont adaptés notamment pour mesurer une quantité de dioxyde de carbone qui est contenue dans la zone de mesure.

En outre, le système LIDAR de l'invention comprend une voie de détection qui est adaptée pour détecter, traiter et analyser indépendamment des rayonnements rétrodiffusés qui correspondent à la première fréquence optique et à la seconde fréquence optique, et qui correspondent respectivement à des émissions pendant les premiers et seconds intervalles de temps.

Possiblement, le système LIDAR peut comprendre en outre une unité de calcul qui est connectée en entrée à au moins une sortie de la voie de détection. Cette unité de calcul est adaptée pour fournir des estimations de la distance d'éloignement de l'obstacle d'arrière-plan et de la quantité du composé chimique qui est contenue dans la zone de mesure, à partir de signaux d'analyse qui sont produits par la voie de détection.

En fonction de différents modes de réalisation qui sont possibles pour l'invention, et notamment en fonction de différents types d'oscillateurs laser qui sont utilisés dans l'ensemble source laser pour produire les rayonnements à chacune des deux fréquences optiques, la première et/ou la seconde largeur spectrale peut être intrinsèque ou produite par des moyens d'élargissement spectral dédiés. On entend par largeur spectrale intrinsèque la largeur spectrale du rayonnement tel que produit par l'oscillateur laser correspondant. Autrement dit, dans le premier cas, la largeur spectrale des impulsions qui sont émises pendant les premiers et/ou les seconds intervalles de temps correspond à la largeur spectrale de l'oscillateur laser correspondant. Dans le cas contraire, le système LIDAR comprend en outre :
- des moyens d'élargissement spectral, qui sont agencés pour modifier la largeur spectrale de l'un au moins des rayonnements produits par l'ensemble source laser.

Dans des premiers modes de réalisation de l'invention, le contrôleur d'émission peut être adapté pour commander l'ensemble source laser, les moyens de modulation d'intensité et, le cas échéant, et les moyens d'élargissement spectral de sorte que, dans la séquence d'émission de rayonnement, la première des deux fréquences optiques soit associée exclusivement à la première largeur spectrale, à la première durée d'impulsion et à la première valeur de puissance optique d'impulsion, à l'exclusion de la seconde largeur spectrale, de la seconde durée d'impulsion et de la seconde valeur de puissance optique d'impulsion, au sein de premières impulsions de rayonnement, et la seconde des deux fréquences optiques soit associée exclusivement à la seconde largeur spectrale, à la seconde durée d'impulsion et à la seconde valeur de puissance optique d'impulsion, à l'exclusion de la première largeur spectrale, de la première durée d'impulsion et de la première valeur de puissance optique d'impulsion, au sein de secondes impulsions de rayonnement qui sont séparées des premières impulsions.

Pour de tels premiers modes de réalisation, le système LIDAR peut avoir un agencement selon lequel l'ensemble source laser comprend un premier oscillateur laser qui est adapté pour produire le rayonnement à la première fréquence optique, et un second oscillateur laser qui est adapté pour produire le rayonnement à la seconde fréquence optique avec la seconde largeur spectrale. Les moyens d'élargissement spectral comprennent alors un modulateur de phase qui est disposé sur un trajet du rayonnement produit par le premier oscillateur laser, et qui est commandé par le contrôleur d'émission pour procurer la première largeur spectrale à ce rayonnement produit par le premier oscillateur laser. De plus, le système LIDAR comprend en outre un commutateur optique qui est commandé par le contrôleur d'émission pour transmettre soit le rayonnement issu du modulateur de phase soit le rayonnement produit par le second oscillateur laser, à une portion aval de chemin optique d'émission qui est commune à ces rayonnements issu du modulateur de phase et produit par le second oscillateur laser, cette portion aval de chemin optique d'émission comprenant les moyens de modulation d'intensité.

Selon un autre agencement qui est aussi possible pour les premiers modes de réalisation de l'invention, l'ensemble source laser comprend de même un premier oscillateur laser qui est adapté pour produire le rayonnement à la première fréquence optique, et un second oscillateur laser qui est adapté pour produire le rayonnement à la seconde fréquence optique avec la seconde largeur spectrale. Les moyens d'élargissement spectral comprennent encore un modulateur de phase qui est disposé sur un trajet du rayonnement produit par le premier oscillateur laser, et qui est commandé par le contrôleur d'émission pour procurer la première largeur spectrale à ce rayonnement produit par le premier oscillateur laser. Mais dans cet autre agencement, les moyens de modulation d'intensité comprennent un premier modulateur d'intensité qui est disposé sur un trajet du rayonnement issu du modulateur de phase, et qui est commandé par le contrôleur d'émission pour être efficace sur ce rayonnement issu du modulateur de phase. Ils comprennent en outre un second modulateur d'intensité qui est disposé sur un trajet du rayonnement produit par le second oscillateur laser, et qui est commandé par le contrôleur d'émission pour être efficace sur ce rayonnement produit par le second oscillateur laser. Alors, le système LIDAR comprend en outre un coupleur optique adapté pour transmettre les rayonnements issus des premier et second modulateurs d'intensité à une portion aval de chemin optique d'émission qui est commune à ces rayonnements issus des premier et second modulateurs d'intensité.

Pour ces deux agencements, la portion aval de chemin optique d'émission peut comprendre un amplificateur de rayonnement optique, ou une chaîne d'amplification de rayonnement optique, qui est commandée par le contrôleur d'émission pour produire les première et seconde valeurs de puissance optique conformément aux caractéristiques de l'invention pour la séquence d'émission de rayonnement.

Dans des seconds modes de réalisation de l'invention, qui sont alternatifs par rapport aux premiers modes de réalisation précédents, le contrôleur d'émission peut être adapté pour commander l'ensemble source laser, les moyens d'élargissement spectral et les moyens de modulation d'intensité de sorte que la séquence d'émission de rayonnement comprenne une succession d'impulsions de rayonnement qui sont situées spectralement soit à la première des deux fréquences optiques, soit à la seconde des deux fréquences optiques, toutes les impulsions de rayonnement ayant la même forme d'enveloppe qui comprend, pour la première fréquence optique comme pour la seconde fréquence optique, une première durée pendant laquelle l'émission de rayonnement possède la première largeur spectrale et la première valeur de puissance optique, et une seconde durée pendant laquelle l'émission de rayonnement possède la seconde largeur spectrale et la seconde valeur de puissance optique, la première durée étant plus courte que la seconde durée, et étant antérieure ou postérieure à cette seconde durée dans chaque impulsion de rayonnement.

De façon générale pour l'invention, le système LIDAR peut être réalisé selon une technologie de fibres optiques.

De façon encore générale pour l'invention, le système LIDAR peut comprendre des moyens de polarisation adaptés pour que les rayonnements qui sont émis en direction de la zone de mesure par ce système LIDAR, aient des polarisations qui sont orthogonales, notamment des polarisations circulaires qui sont opposées, lorsque ces rayonnements sont émis pendant les premiers intervalles de temps ou les seconds intervalles de temps. Dans ce cas, la voie de détection peut comprendre un séparateur de polarisation qui est disposé pour transmettre les rayonnements rétrodiffusés, en fonction de polarisations de ces rayonnements rétrodiffusés, soit vers un premier détecteur qui est sensible dans un premier intervalle spectral incluant la première fréquence optique combinée avec la première largeur spectrale, soit vers un second détecteur qui est sensible dans un second intervalle spectral incluant à la seconde fréquence optique combinée avec la seconde largeur spectrale. Possiblement, les deux détecteurs peuvent être identiques si leur intervalle spectral de sensibilité commun inclut à la fois la première fréquence optique combinée avec la première largeur spectrale et la seconde fréquence optique combinée avec la seconde largeur spectrale.

Un second aspect de l'invention propose un procédé de mesure d'une quantité d'un composé chimique qui est présente dans une direction-cible, suivant lequel :
- un système LIDAR qui est conforme au premier aspect de l'invention, est sélectionné de sorte que le composé chimique possède une valeur de pouvoir d'absorption qui est inférieure à la première fréquence optique par rapport à la seconde fréquence optique ;
- le système LIDAR est orienté selon la direction-cible pour émettre du rayonnement selon la séquence d'émission de rayonnement vers une zone de mesure qui est susceptible de contenir le composé chimique, et un fonctionnement du système LIDAR est déclenché ;
- la distance d'éloignement de l'obstacle qui est présent en arrière-plan de la zone de mesure est estimée à partir du rayonnement rétrodiffusé qui est relatif à la première fréquence optique et qui correspond à des émissions pendant les premiers intervalles de temps ; et
- la quantité du composé chimique qui est contenue dans la zone de mesure, intégrée sur le trajet des impulsions entre le système LIDAR et l'obstacle d'arrière-plan, est estimée à partir de valeurs d'intensité qui sont relatives séparément aux rayonnements rétrodiffusés à la première fréquence optique et à la seconde fréquence optique, correspondant respectivement aux premiers et seconds intervalles de temps dans la séquence d'émission de rayonnement, ces rayonnements rétrodiffusés ayant été détectés par la voie de détection du système LIDAR.

De préférence, la distance d'éloignement de l'obstacle qui est présent en arrière-plan de la zone de mesure peut être estimée à partir d'un temps de vol qui est mesuré pour le rayonnement rétrodiffusé relatif à la première fréquence optique. Dans ce cas, cette distance d'éloignement, telle qu'estimée à partir du rayonnement rétrodiffusé qui est relatif à la première fréquence optique, peut être utilisée pour estimer la quantité du composé chimique intégrée sur le trajet des impulsions qui est contenue dans la zone de mesure, en combinaison avec les valeurs d'intensité qui sont relatives séparément aux rayonnements rétrodiffusés et détectés à la première fréquence optique et à la seconde fréquence optique, et correspondant respectivement aux émissions pendant les premiers et seconds intervalles de temps.

Le composé chimique qui est concerné par le procédé de mesure de l'invention peut être l'un parmi le dioxyde de carbone, ou CO₂, le méthane, ou CH₄, le protoxyde d'azote, ou N₂O, et l'eau, ou H₂O.

Enfin, différentes conditions de mise en oeuvre de l'invention peuvent être les suivantes :
- pour des premières conditions de mise en oeuvre, le système LIDAR peut être installé à la surface de la Terre et dirigé pour mesurer la quantité du composé chimique qui est présente entre ce système LIDAR et l'obstacle ;
- pour des deuxièmes conditions de mise en oeuvre, le système LIDAR peut être embarqué à bord d'un aéronef en vol et dirigé vers une zone géographique à la surface de la Terre, pour mesurer la distance d'éloignement de la surface de la Terre dans cette zone géographique par rapport au système LIDAR, et pour mesurer la quantité du composé chimique qui est présente entre le système LIDAR et la surface de la Terre dans la même zone géographique ; et
- pour des troisièmes conditions de mise en oeuvre, le système LIDAR peut être embarqué à bord d'un satellite en orbite autour de la Terre et dirigé vers une zone géographique à la surface de la Terre, pour mesurer la distance d'éloignement de la surface de la Terre dans cette zone géographique par rapport au système LIDAR, et pour mesurer la quantité du composé chimique qui est présente entre le système LIDAR et la surface de la Terre la même zone géographique.

Pour les deuxièmes et troisièmes conditions de mise en oeuvre, la surface de la Terre dans la zone géographique vers laquelle le système LIDAR est dirigé, a la fonction d'obstacle présent en arrière-plan de la zone de mesure.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1a] montre des variations spectrales d'une première séquence d'émission de rayonnement telle que mise en oeuvre dans des premiers modes de réalisation possibles pour l'invention ;
[Fig. 1b] montre des variations de puissance optique d'émission pour la première séquence d'émission de rayonnement de [Fig. 1a] ;
[Fig. 2a] montre des variations spectrales d'une seconde séquence d'émission de rayonnement telle que mise en oeuvre dans des seconds modes de réalisation possibles pour l'invention ;
[Fig. 2b] montre des variations de puissance optique d'émission pour la seconde séquence d'émission de rayonnement de [Fig. 2a] ;
[Fig. 3a] est un schéma synoptique d'une voie d'émission d'un système LIDAR conforme à l'invention, qui est adaptée pour produire la première séquence d'émission de rayonnement de [Fig. 1a] et [Fig. 1b] ;
[Fig. 3b] est un schéma synoptique d'une première variante de voie d'émission par rapport au système de [Fig. 3a], pour un autre système LIDAR conforme à l'invention, et encore pour produire la première séquence d'émission de rayonnement de [Fig. 1a] et [Fig. 1b] ;
[Fig. 3c] est un schéma synoptique d'une deuxième variante de voie d'émission par rapport au système de [Fig. 3a], pour encore un autre système LIDAR conforme à l'invention, et encore pour produire la première séquence d'émission de rayonnement de [Fig. 1a] et [Fig. 1b] ;
[Fig. 3d] est un schéma synoptique d'une troisième variante de voie d'émission par rapport au système de [Fig. 3a], pour encore un autre système LIDAR conforme à l'invention, et encore pour produire la première séquence d'émission de rayonnement de [Fig. 1a] et [Fig. 1b] ;
[Fig. 3e] est un schéma synoptique d'une quatrième variante de voie d'émission par rapport au système de [Fig. 3a], pour encore un autre système LIDAR conforme à l'invention, et encore pour produire la première séquence d'émission de rayonnement de [Fig. 1a] et [Fig. 1b] ;
[Fig. 4a] est un schéma synoptique d'une voie d'émission d'encore un autre système LIDAR conforme à l'invention, et qui est encore adaptée pour produire la première séquence d'émission de rayonnement de [Fig. 1a] et [Fig. 1b] ;
[Fig. 4b] est un schéma synoptique d'une variante de voie d'émission par rapport au système de [Fig. 4a], pour encore un autre système LIDAR conforme à l'invention, et qui est encore adaptée pour produire la première séquence d'émission de rayonnement de [Fig. 1a] et [Fig. 1b] ;
[Fig. 5a] est un schéma synoptique d'une voie d'émission d'encore un autre système LIDAR conforme à l'invention, qui est adaptée pour produire la seconde séquence d'émission de rayonnement de [Fig. 2a] et [Fig. 2b] ;
[Fig. 5b] est un schéma synoptique d'une variante de voie d'émission par rapport au système de [Fig. 5a], pour encore un autre système LIDAR conforme à l'invention, et qui est encore adaptée pour produire la seconde séquence d'émission de rayonnement de [Fig. 2a] et [Fig. 2b] ;
[Fig. 6a] est un schéma synoptique d'une voie de détection d'un système LIDAR conforme à l'invention ;
[Fig. 6b] est un schéma synoptique d'une variante de voie de détection par rapport au système de [Fig. 6a] ;
[Fig. 6c] est un schéma synoptique d'une autre variante de voie de détection par rapport au système de [Fig. 6a] ; et
[Fig. 6d] est un schéma synoptique d'encore une autre variante de voie de détection par rapport au système de [Fig. 6a].

### Description détaillée de l'invention

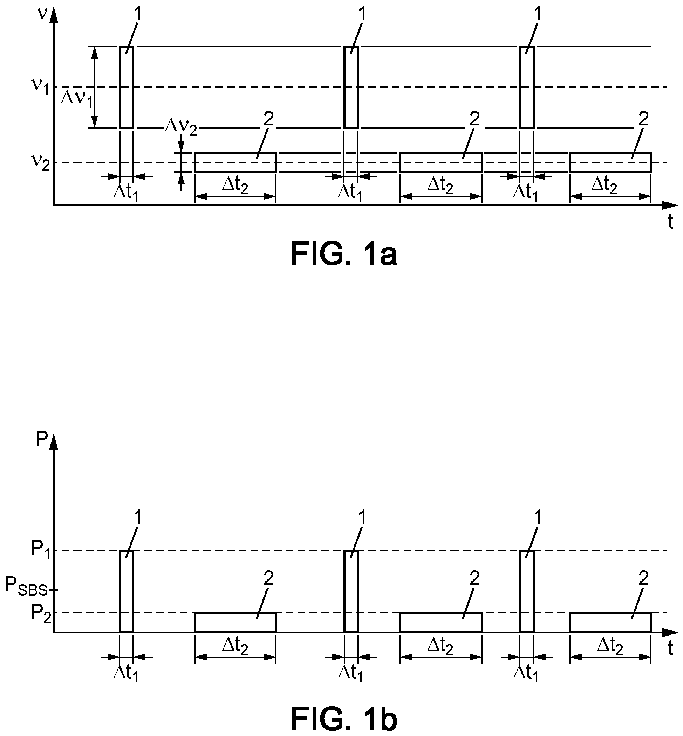

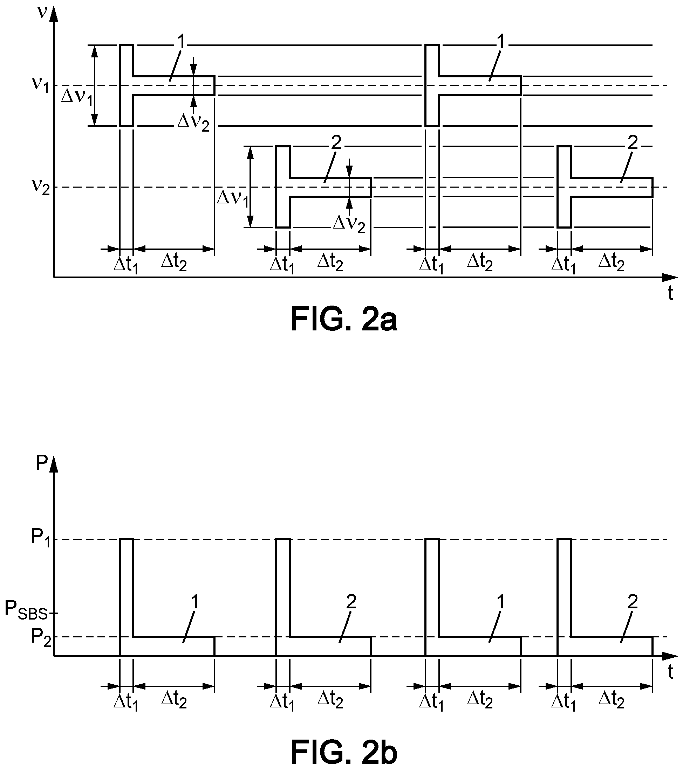

Pour raison de clarté, les dimensions des éléments qui sont représentés dans [Fig. 1a], [Fig. 1b], [Fig. 2a] et [Fig. 2b] ne correspondent ni à des dimensions réelles, ni à des rapports de dimensions réels. En outre, tous les éléments ne sont représentés que symboliquement dans les figures, et des références identiques qui sont indiquées dans des figures différentes désignent des éléments identiques ou qui ont des fonctions identiques.

Dans les diagrammes de [Fig. 1a], [Fig. 1b], [Fig. 2a] et [Fig. 2b], l'axe d'abscisse repère le temps, noté t, au cours de séquences d'émission de rayonnement qui sont constituées d'impulsions de rayonnement situées spectralement soit autour d'une première fréquence optique, notée v₁, soit autour d'une seconde fréquence optique, notée v₂. Δt₁ et Δt₂ désignent respectivement des durées de premiers et seconds intervalles de temps pendant ces séquences d'émission de rayonnement. Dans [Fig. 1a] et [Fig. 2a], l'axe d'ordonnée repère les valeurs de la fréquence optique d'émission, notée v, pour chaque instant de la séquence d'émission concernée, et dans [Fig. 2a] et [Fig. 2b], l'axe d'ordonnée repère la puissance instantanée d'émission du rayonnement, notée P. De façon générale, les impulsions de rayonnement qui sont désignées par la référence 1 sont situées spectralement autour de la fréquence optique v₁, et supposées toutes identiques entre elles. De façon similaire, les impulsions de rayonnement qui sont désignées par la référence 2 sont situées spectralement autour de la fréquence optique v₂, et supposées aussi toutes identiques entre elles. Pour l'application de l'invention à des mesures d'absorption différentielle d'un composé chimique entre deux fréquences optiques distinctes, toutes les impulsions de rayonnement 1 et 2 sont émises en direction d'une zone de mesure qui est susceptible de contenir une quantité à déterminer du composé chimique. La fréquence optique d'émission v₁ est destinée à être sélectionnée en dehors des bandes d'absorption du composé chimique, et la fréquence optique d'émission v₂ est destinée à être sélectionnée dans une des bandes d'absorption de ce composé chimique. Dans le cas où le composé chimique concerné est le dioxyde de carbone, la fréquence optique d'émission v₁ peut être choisie égale à 190,81 THz, correspondant à une valeur de longueur d'onde λ₁ égale à 1572,2 nm, et la fréquence optique d'émission v₂ peut être choisie égale à 190,84 THz, correspondant à une valeur de longueur d'onde λ₂ égale à 1572,02 nm.

[Fig. 1a] et [Fig. 1b] sont relatives à une même première séquence d'émission de rayonnement qui est possible pour mettre en oeuvre l'invention. Dans une telle première séquence d'émission, toutes les impulsions de rayonnement 1 ont des premières valeurs communes de largeur spectrale Δv₁ et de puissance-crête d'émission P₁, et ont une durée d'impulsion égale à Δt₁. De même, toutes les impulsions de rayonnement 2 de cette même séquence d'émission ont des secondes valeurs communes de largeur spectrale Δv₂ et de puissance-crête d'émission P₂, et ont une durée d'impulsion égale à Δt₂. Les valeurs de puissance-crête d'émission P₁ et P₂ correspondent au rayonnement émis par un système LIDAR conforme à l'invention, tel que ce rayonnement d'émission sort du système LIDAR en direction de la zone de mesure, notamment après que l'amplification optique finale a été effectuée à l'intérieur du système LIDAR. Pour cette première séquence d'émission de rayonnement, les impulsions 1, de durées individuelles Δt₁, correspondent aux premiers intervalles de temps tels qu'introduits dans la partie générale de la présente description, et les impulsions 2, de durées individuelles Δt₂, correspondent aux seconds intervalles de temps. Grâce à l'élargissement spectral qui est supérieur pour les impulsions 1 par rapport aux impulsions 2, c'est-à-dire Δv₁>Δv₂, la valeur de puissance-crête d'émission P₁ peut être supérieure à une limite de puissance due à la diffusion Brillouin stimulée, noté P_{SBS}, qui se produit dans des fibres optiques du système LIDAR, alors que la valeur de puissance-crête d'émission P₂ peut être inférieure à cette même limite de puissance P_{SBS}.

[Fig. 2a] et [Fig. 2b] sont relatives à une même seconde séquence d'émission de rayonnement qui est aussi possible pour mettre en oeuvre l'invention. Dans une telle seconde séquence d'émission, toutes les impulsions de rayonnement 1 et 2 qui sont émises en direction de la zone de mesure susceptible de contenir la quantité à déterminer du composé chimique, ont une même forme d'enveloppe, qui est transposée à la fréquence optique de chaque impulsion, celle-ci alternant entre v₁ pour les impulsions 1 et v₂ pour les impulsions 2. Cette forme d'enveloppe comprend, à l'intérieur de chaque impulsion 1, 2, un premier intervalle de temps de durée Δt₁ pendant lequel le rayonnement de l'impulsion 1 ou 2 a la valeur de largeur spectrale Δv₁ et la valeur de puissance-crête d'émission P₁, et un second intervalle de temps de durée Δt₂ pendant lequel le rayonnement de l'impulsion 1 ou 2 a la valeur de largeur spectrale Δv₂ et la valeur de puissance-crête d'émission P₂. L'ordre chronologique entre les premier et second intervalles de temps, chacun avec ses valeurs associées de largeur spectrale et de puissance-crête d'émission, peut être inversé à l'intérieur de chaque impulsion, et les premier et second intervalles de temps peuvent éventuellement aussi être séparés par un motif intermédiaire de forme d'enveloppe au sein de chaque impulsion. De même que précédemment, la limite de puissance P_{SBS} qui est associée à un effet de diffusion Brillouin stimulée peut être inférieure à la valeur de puissance-crête d'émission P₁ et supérieure à la valeur de puissance-crête d'émission P₂.

Pour la première séquence d'émission ([Fig. 1a] et [Fig. 1b]) comme pour la seconde séquence d'émission ([Fig. 2a] et [Fig. 2b]), les émissions de rayonnement à la fréquence optique v₁ pendant les durées Δt₁ sont utilisées pour déterminer la distance d'éloignement de l'obstacle d'arrière-plan. Dans le cas de la seconde séquence d'émission de rayonnement, les parties des impulsions 1 qui correspondent aux durées Δt₂, avec la valeur de largeur spectrale Δv₂ et la valeur de puissance-crête d'émission P₂, peuvent ne pas être utilisées pour estimer la distance d'éloignement de l'obstacle d'arrière-. Toutefois, les parties des impulsions 2 qui correspondent aux durées Δt₁, avec la valeur de largeur spectrale Δv₁ et la valeur de puissance-crête d'émission P₁, peuvent éventuellement être utilisées en plus des parties des impulsions 1 qui correspondent aux durées Δt₁ pour déterminer la distance d'éloignement de l'obstacle d'arrière-plan.

Une généralisation de la seconde séquence d'impulsions peut être que chaque impulsion 1 ou 2, respectivement autour de la fréquence optique v₁ ou v₂, présente un front raide de montée de puissance optique, qui est large spectralement et qui permet d'effectuer la mesure télémétrique, suivi d'une décroissance de puissance optique qui est lente et fine spectralement, adaptée pour la mesure différentielle d'absorption.

Pour ces deux séquences d'émission de rayonnement, respectivement selon [Fig. 1a] et [Fig. 1b] pour la première, et selon [Fig. 2a] et [Fig. 2b] pour la seconde, les valeurs numériques suivantes sont données à titre d'exemple non-limitatif :
la fréquence de répétition des impulsions peut être entre 1 kHz (kilohertz) et 50 kHz,
Δt₁ peut être entre 50 ns et 100 ns,
Δt₂ peut être entre 0,5 µs et 5 µs,
Δv₁ peut être entre 500 MHz et 1000 MHz,
Δv₂ peut être entre 50 MHz et 100 MHz,
P₁ peut être supérieure à 200 W, et
P₂ peut être supérieure à 50 W.
Ainsi, la durée Δt₁ des premiers intervalles de temps peut être plus courte que la durée Δt₂ des seconds intervalles de temps. En outre, la première valeur de largeur spectrale Δv₁ peut être supérieure à la seconde valeur de largeur spectrale Δv₂, et la première valeur de puissance-crête d'émission P₁ peut être supérieure à la seconde valeur de puissance-crête d'émission P₂. Alors, grâce à la première valeur de largeur spectrale Δv₁ qui est accrue, la valeur P₁ est répartie sur un intervalle spectral d'émission qui est plus large que celui sur lequel est répartie la valeur P₂. Pour cette raison, la valeur P₁ peut être supérieure au seuil de diffusion Brillouin stimulée P_{SBS} qui correspond aux fibres optiques utilisées pour réaliser le système LIDAR. De préférence, la valeur P₂ peut être choisie pour être inférieure ou égale à ce seuil de diffusion Brillouin stimulée, afin de limiter une perte de rendement énergétique dans la production du rayonnement à émettre pendant les seconds intervalles de temps, de durées individuelles Δt₂.

On décrit maintenant plusieurs architectures de systèmes LIDAR qui sont conformes à l'invention, et qui sont conçues pour émettre des séquences de rayonnement telles que décrites ci-dessus. La description de ces architectures est limitée à l'organisation de leurs principaux composants, étant entendu que l'Homme du métier connaît de tels composants qui sont disponibles commercialement, et saura les combiner selon les architectures décrites, sans difficulté ni besoin d'activité inventive. En outre, il est entendu que des composants supplémentaires à utiliser dans ces architectures, mais qui ne sont pas reliés directement au principe de l'invention, et dont l'utilisation est courante, ne sont pas décrits par souci de clarté. Toutes ces architectures de systèmes LIDAR qui sont décrites par la suite peuvent avantageusement être mises en oeuvre en utilisant des technologies de fibres optiques, ou des technologies de circuits optiques intégrés, pour la réalisation des composants optiques, électro-optiques et d'interconnexion qui sont utilisés. Dans celles des figures qui montrent des architectures de voie d'émission, la référence 50 désigne un contrôleur d'émission, qui est noté CTRL et connecté aux composants de la voie d'émission pour produire la séquence d'émission de rayonnement qui possède les caractéristiques voulues. Le mode de commande à mettre en oeuvre par ce contrôleur d'émission 50 est à la portée de l'Homme du métier une fois que la séquence d'émission de rayonnement qui est à produire lui est fournie.

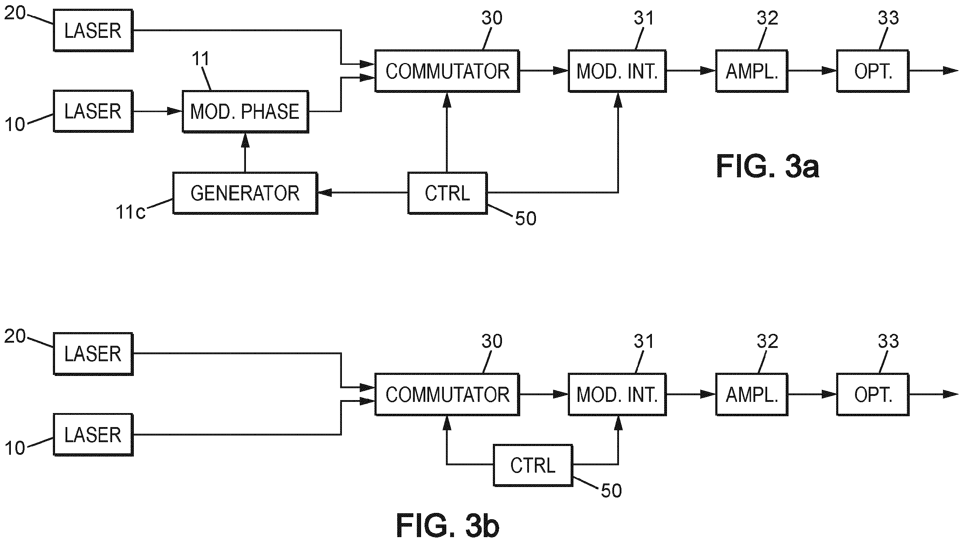

[Fig. 3a] montre une première architecture possible de voie d'émission pour un système LIDAR selon l'invention, qui est conçue pour produire des séquences d'émission de rayonnement conformes à [Fig. 1a] et [Fig. 1b]. La référence 10 désigne une source laser, couramment appelée oscillateur laser, qui est capable de produire un faisceau laser continu à la fréquence optique v₁. Ce peut être par exemple une diode laser ou un laser à fibre. Le faisceau laser qui est produit par la source 10 est envoyé à travers un modulateur de phase 11, noté MOD. PHASE, qui lui procure la largeur spectrale Δv₁. Il s'agit dans ce cas d'une modulation de phase externe à la source laser. Le modulateur de phase 11 peut être un modulateur électro-optique, par exemple. Un générateur aléatoire de signaux binaires, tel que connu usuellement sous l'acronyme PRBS pour «Pseudo-Random Binary Sequence» en anglais, ou un générateur de bruit radiofréquence, ou encore un générateur électrique de formes d'onde arbitraires, connu sous l'acronyme AWG pour «Arbitrary Waveform Generator» en anglais, peut être connecté à une entrée de commande électrique du modulateur de phase 11. Celui qui est utilisé parmi ces modes alternatifs de commande du modulateur de phase 11 est désigné par la référence 11c et noté GENERATOR. Dans le cas d'utilisation d'un générateur PRBS, celui-ci produit des sauts de phase qui sont égaux à -π ou π selon une séquence aléatoire ou pseudo-aléatoire. Le modulateur de phase 11 peut alors être avantageusement associé à sa sortie à un filtre optique d'apodisation (non-représenté) pour supprimer des lobes secondaires que peut générer une telle méthode d'élargissement spectral dans le spectre du rayonnement qui est issu directement du modulateur de phase 11. Dans le cas d'utilisation d'un générateur AWG, celui-ci peut être programmé pour produire diverses formes d'onde telles qu'une succession de rampes dont les pentes sont variables aléatoirement entre rampes successives. Alternativement, il peut être programmé pour produire un signal électrique de commande qui est sinusoïdal ou qui est une combinaison linéaire de plusieurs composantes sinusoïdales. D'autres formes pour les signaux électriques de commande qui sont destinés au modulateur de phase 11 peuvent encore être utilisées alternativement, étant entendu que l'Homme du métier sait sélectionner les caractéristiques de tels signaux électriques de commande pour procurer au rayonnement qui sort du modulateur de phase 11 une forme d'enveloppe spectrale voulue, avec la largeur spectrale Δv₁. Le générateur 11c peut être activé par le contrôleur d'émission 50 sélectivement pour produire les impulsions 1, ou peut être activé en permanence. La référence 20 désigne une autre source laser, c'est-à-dire un autre oscillateur laser, qui est capable de produire un autre faisceau laser continu, qui possède la fréquence optique v₂, directement avec la largeur spectrale Δv₂. Par exemple, la source laser 20 peut être du type laser à fibre. En effet, la valeur de largeur spectrale Δv₂ étant faible pour l'invention, elle peut être fournie directement, ou intrinsèquement, par la source laser 20, c'est-à-dire sans utiliser de composant additionnel qui soit spécifiquement dédié à produire cette valeur de largeur spectrale. Les deux sources laser 10 et 20 constituent l'ensemble source laser tel que désigné dans la partie générale de la présente description. Les deux rayonnements qui sont issus respectivement du modulateur de phase 11 et de la source laser 20 sont alors injectés dans deux entrées d'un commutateur optique 30, qui est noté COMMUTATOR. Celui-ci peut être un commutateur optique 2 x 1 qui est commandé par le contrôleur d'émission 50 pour transmettre en sortie le rayonnement reçu sur l'une ou l'autre de ses deux entrées, pendant les premiers et/ou seconds intervalles de temps, et selon la séquence d'alternance qui est voulue entre les impulsions de rayonnement à la fréquence optique v₁ et celles à la fréquence optique v₂. Alternativement, le commutateur optique 30 peut être remplacé par un coupleur optique fibré en Y, par exemple à rapport d'intensité 50/50 et éventuellement à maintien de polarisation, ou encore remplacé par un coupleur en polarisation, par exemple de type cube séparateur de polarisation. Puis le rayonnement tel qu'issu du commutateur optique 30, est introduit dans un modulateur d'intensité 31, qui est noté MOD. INT. et commandé par le contrôleur d'émission 50 pour que le rayonnement qui est finalement émis en direction de la zone de mesure possède la valeur de puissance instantanée P₁ pendant les premiers intervalles de temps de durées Δt₁ où la fréquence optique est plus proche de la valeur v₁, et possède la valeur de puissance instantanée P₂ pendant les seconds intervalles de temps de durées Δt₂ où la fréquence optique est plus proche de la valeur v₂. Le modulateur d'intensité 31 peut être de type électro-optique, ou électro-acoustique, ou à amplificateur optique à semi-conducteur. De façon connue, un tel modulateur d'intensité peut incorporer un contrôleur interne, ou être associé à un contrôleur externe qui est intercalé entre ce modulateur d'intensité et le contrôleur d'émission 50. Le rayonnement qui est issu du modulateur d'intensité 31 est alors transmis à un ensemble d'amplification optique 32, ou à une chaîne d'amplification optique 32, noté AMPL., afin de produire réellement les valeurs de puissance optique d'émission P₁ et P₂. Enfin, le rayonnement qui est issu de l'ensemble d'amplification optique 32 est transmis vers la zone de mesure par une optique de sortie 33 de la voie d'émission du système LIDAR, notée OPT.

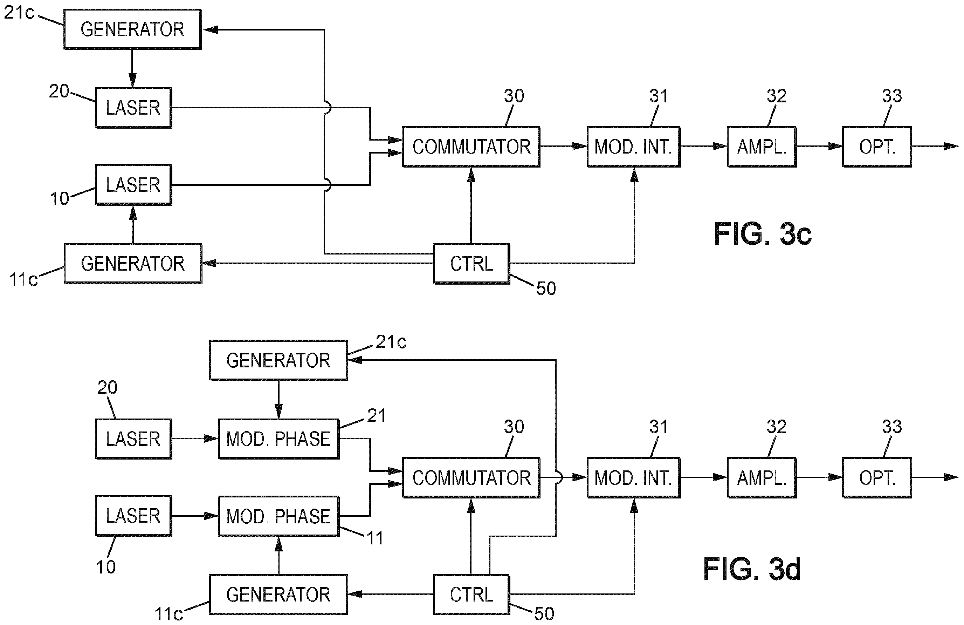

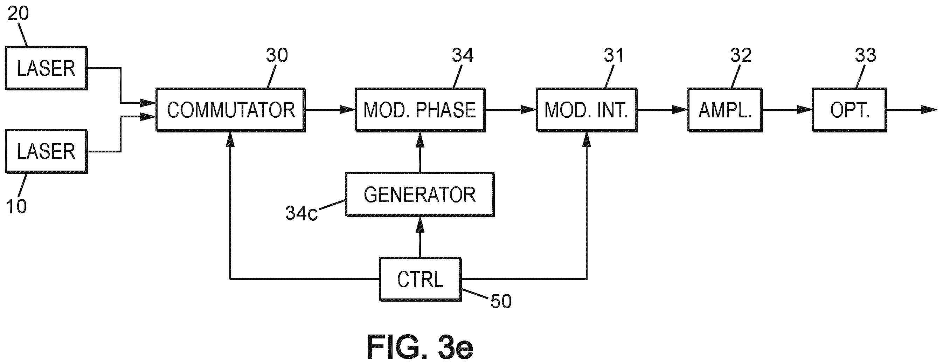

Plusieurs architectures alternatives de systèmes LIDAR peuvent être dérivées de celle de [Fig. 3a], en utilisant à chaque fois l'un au moins des principes d'équivalence suivants, appliqué à l'architecture de voie d'émission de [Fig. 3a] :
- si la source laser 10 est d'un type capable de produire un faisceau laser à la fréquence optique v₁ directement avec la valeur de largeur spectrale Δv₁, comme la source laser 20 de [Fig. 3a] pour la valeur de largeur spectrale Δv₂, alors le modulateur de phase 11 peut être supprimé si bien que le faisceau laser de la source laser 10 peut être transmis directement au commutateur optique 30, comme pour la source laser 20. La configuration de [Fig. 3b] est ainsi obtenue ;
- lorsque la source laser 10 est d'un type accordable, le signal électrique de commande qui est utilisé pour conférer la largeur spectrale Δv₁ au rayonnement qui est émis autour de la fréquence optique v₁, peut être appliqué directement à une entrée de commande de la source laser accordable 10. Un tel mode d'obtention de la largeur spectrale voulue est parfois appelé modulation de phase interne, par opposition à l'utilisation d'un modulateur de phase qui est externe à la source laser comme représenté dans [Fig. 3a]. Des sources laser à modulation interne sont par exemple des diodes laser pour lesquelles le courant électrique d'injection dans la zone de gain peut être modulé avec une faible amplitude de modulation, ou des diodes DBR, pour diodes à réflecteur de Bragg distribué ou «Distributed Bragg Reflector diodes» en anglais, pour lesquelles l'injection dans les zones de phase, de réseau ou d'amplification optique à semi-conducteur peut être modulée. Alternativement ou en combinaison, ce mode d'obtention de la largeur spectrale voulue, de façon interne à la source laser, peut aussi être appliqué à la source laser 20, lorsque cette dernière est elle-même du type accordable, pour obtenir la largeur spectrale Δv₂. La configuration de [Fig. 3c] est ainsi obtenue, où les références 11c et 21c désignent les générateurs de signaux de modulation qui sont connectés aux entrées de commande respectives des sources laser accordables 10 et 20 ;
- deux modulateurs de phase externes distincts peuvent être utilisés simultanément, l'un entre la source laser 10 et le commutateur optique 30 pour procurer la largeur spectrale Δv₁ au rayonnement qui est émis à la fréquence optique v₁, comme dans le cas de [Fig. 3a], et l'autre entre la source laser 20 et le commutateur optique 30 pour procurer la largeur spectrale Δv₂ au rayonnement qui est émis à la fréquence optique v₂. La configuration de [Fig. 3d] est ainsi obtenue, où les références 11 et 21 désignent les deux modulateurs de phase externes qui sont respectivement associés aux sources laser 10 et 20, et les références 11c et 21c désignent les générateurs de signaux de modulation de phase qui sont connectés aux entrées de commande respectives de ces modulateurs de phase 11 et 21 ; et
- un modulateur de phase unique peut être utilisé pour être effectif pour les deux rayonnements qui sont produits séparément aux fréquences optiques v₁ et v₂ par les sources laser 10 et 20. Dans ce cas, les faisceaux laser des deux sources laser 10 et 20 sont transmis directement aux entrées du commutateur optique 30, et le modulateur de phase unique est situé entre la sortie du commutateur optique 30 et l'entrée du modulateur d'intensité 31. Ce modulateur de phase unique peut alors être commandé de l'une des façons décrites précédemment, pour produire la largeur spectrale Δv₁ pendant les premiers intervalles de temps où le commutateur optique 30 transmet du rayonnement qui possède la fréquence optique v₁, et pour produire la largeur spectrale Δv₂ pendant les seconds intervalles de temps où le commutateur optique 30 transmet du rayonnement qui possède la fréquence optique v₂. La configuration de [Fig. 3e] est ainsi obtenue, où la référence 34 désigne le modulateur de phase externe qui est commun aux deux rayonnements des fréquences optiques v₁ et v₂, et la référence 34c désigne le générateur de signaux de modulation de phase qui est connecté à l'entrée de commande de ce modulateur de phase 34.

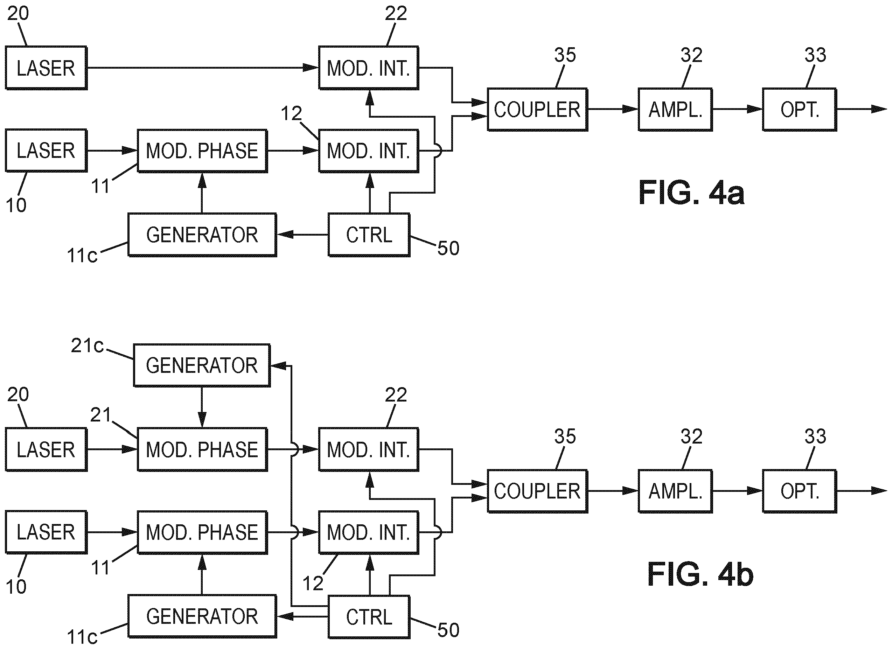

Le mode de réalisation de [Fig. 4a] peut être obtenu à partir de celui de [Fig. 3a] en réalisant des modulations d'intensité des rayonnements situés autour des fréquences optiques v₁ et v₂ en amont de la réunion des voies séparées de génération de ces rayonnements. La voie de génération du rayonnement qui est situé autour de la fréquence optique v₁ est identique à celle de [Fig. 3a], en y ajoutant un modulateur d'intensité 12. De même, la voie de génération du rayonnement qui est situé autour de la fréquence optique v₂ est identique à celle de [Fig. 3a], en y ajoutant un modulateur d'intensité 22. Les deux modulateurs d'intensité 12 et 22 peuvent être commandés par le contrôleur d'émission 50 d'une façon qui est corrélée temporellement avec le signal de modulation qui est produit par le générateur 11c. En particulier, ils produisent des fenêtres temporelles de transmission qui limitent les premiers intervalles temps, de durées individuelles Δt₁, et les seconds intervalles temps, de durées individuelles Δt₂, à la fréquence de répétition voulue. Pour un tel mode de réalisation, les voies séparées de génération des rayonnements situés autour des deux fréquences optiques v₁ et v₂ peuvent être réunies en utilisant un coupleur 35, en direction de la partie aval de la voie d'émission, qui est commune aux deux fréquences optiques et qui comprend l'ensemble d'amplification optique 32. Le coupleur 35 peut être un coupleur en Y usuel. Alternativement, ce peut être un coupleur en polarisation, qui est capable d'affecter une polarisation déterminée au rayonnement qui est transmis pendant les premiers intervalles de temps, de durées individuelles Δt₁, et la polarisation orthogonale au rayonnement qui est transmis pendant les seconds intervalles de temps, de durées individuelles Δt₂. Par exemple, une polarisation linéaire parallèle à une direction fixe peut être conférée par le coupleur en polarisation 35 au rayonnement qui est transmis pendant les premiers intervalles de temps de durées individuelles Δt₁, et une polarisation linéaire perpendiculaire à la direction fixe peut être conférée par le coupleur en polarisation 35 au rayonnement qui est transmis pendant les seconds intervalles de temps de durées individuelles Δt₂.

Le mode de réalisation de [Fig. 4b] peut être obtenu de la même façon que celui de [Fig. 4a], mais à partir du mode de réalisation de [Fig. 3d], au lieu de celui de [Fig. 3a]. En appliquant la même méthode, l'Homme du métier pourra déduire encore d'autres modes de réalisation possibles pour l'invention, par exemple en remplaçant dans ceux de [Fig. 3b], [Fig. 3c] ou [Fig. 3e] le modulateur d'intensité unique par deux modulateurs d'intensité qui sont dédiés séparément aux rayonnements situés autour des deux fréquences optiques v₁ et v₂.

Tous les modes de réalisation de [Fig. 3a]-[Fig. 3e] et [Fig. 4a]-[Fig. 4b] sont adaptés pour produire des séquences d'émission de rayonnement qui sont conformes à [Fig. 1a] et [Fig. 1b].

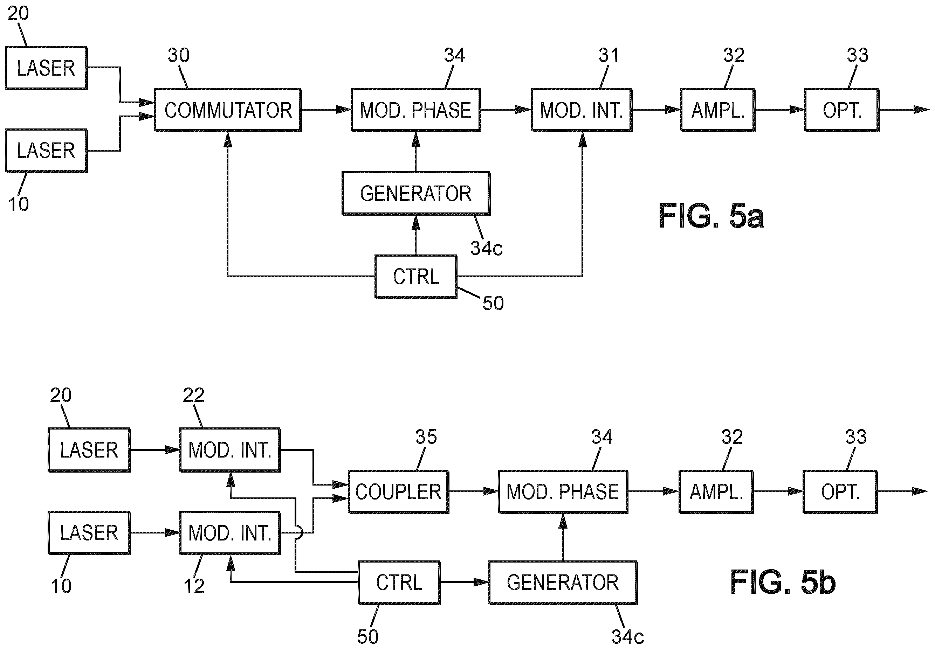

Par différence avec les modes de réalisation de [Fig. 3a]-[Fig. 3e] et [Fig. 4a]-[Fig. 4b], la modulation de phase qui est utilisée dans les modes de réalisation de [Fig. 5a] et [Fig. 5b], pour obtenir les largeurs spectrales Δv₁ et Δv₂ qui sont voulues séparément pendant les durées d'intervalles de temps Δt₁ et Δt₂, est commune pour les deux fréquences optiques v₁ et v₂. Il est alors possible d'utiliser un unique modulateur de phase, qui est alors situé en aval du commutateur optique ou du coupleur optique qui regroupe dans la partie aval commune de la voie d'émission les faisceaux provenant séparément des deux sources laser 10 et 20. Une réduction de coût peut ainsi être obtenue pour le système LIDAR.

Ces modes de réalisation de [Fig. 5a] et [Fig. 5b] sont adaptés pour produire des séquences d'émission de rayonnement qui sont conformes à [Fig. 2a] et [Fig. 2b].

Dans le mode de réalisation de [Fig. 5a], la modulation de phase et celle d'intensité sont effectuées toutes les deux en aval de la réunion des chemins optiques des rayonnements qui proviennent séparément des sources laser 10 et 20. Cette réunion des chemins optiques est réalisée par le commutateur 30, la modulation de phase est produite par le modulateur de phase 34, et la modulation d'intensité est produite par le modulateur d'intensité 31. Le générateur de signaux de modulation de phase 34c peut encore être de l'un des types présentés plus haut : générateur PRBS, générateur de bruit RF ou générateur AWG. Le commutateur 30, le générateur de signaux de modulation de phase 34c et le modulateur d'intensité 31 peuvent tous être commandés de façon synchronisée par le contrôleur d'émission 50.

Dans le mode de réalisation de [Fig. 5b], les rayonnements qui proviennent séparément des sources laser 10 et 20 sont modulés en intensité en utilisant deux modulateurs séparés, qui sont désignés par les références 12 et 22. Les rayonnements modulés en intensité qui sont issus de ceux-ci peuvent être introduits par un coupleur 35 dans la partie aval commune de la voie d'émission. Le coupleur 35 peut encore être un coupleur en Y ou un coupleur en polarisation comme indiqué plus haut. La partie aval de la voie d'émission comprend alors le modulateur de phase 34, l'ensemble d'amplification optique 32 et l'optique de sortie 33.

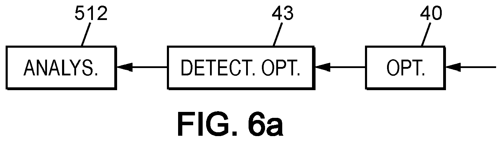

[Fig. 6a] montre une première architecture de voie de détection qui peut être utilisée dans un système LIDAR conforme à l'invention. La référence 40 désigne une optique d'entrée, notée OPT., de la voie de détection. Sa fonction est de collecter une partie du rayonnement rétrodiffusé qui correspond à la séquence d'émission de rayonnement produite par le système LIDAR. Cette partie collectée de rayonnement est dirigée sur un capteur optique 43, noté DETECT. OPT., qui produit un signal électrique de détection dont l'intensité est fonction de la puissance de la partie du rayonnement qui est détectée. Le capteur optique 43 peut être mis en oeuvre selon un mode de détection directe, ou selon un mode de détection cohérente. Un capteur optique à détection directe peut être composé par une photodiode qui est associée à un amplificateur électrique transimpédance, par exemple. Un capteur optique à détection cohérente, aussi appelée détection hétérodyne, nécessite de mélanger le rayonnement rétrodiffusé qui est collecté par l'optique d'entrée 40 avec une partie du rayonnement qui est produit par l'ensemble source laser. La sortie électrique du capteur optique 43 est connectée à l'entrée d'une chaîne d'analyse 512, notée ANALYS., qui traite les signaux électriques délivrés par le capteur 43 quelle que soit l'impulsion 1 ou 2 à laquelle chaque signal électrique correspond.

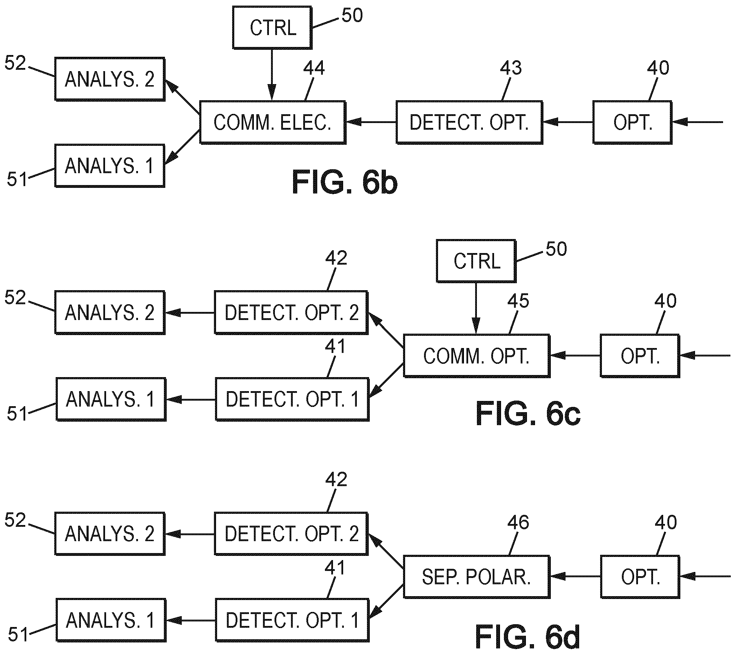

[Fig. 6b] montre une deuxième architecture de voie de détection qui utilise deux chaînes d'analyse distinctes qui sont dédiées séparément aux impulsions de rayonnement 1 et aux impulsions de rayonnement 2. Un commutateur électrique 44, noté COMM. ELEC., oriente alors le signal électrique de détection vers deux chaînes d'analyse distinctes 51 et 52, notées ANALYS. 1 et ANALYS. 2, en fonction des parties du signal électrique de détection qui correspondent séparément à des premiers ou seconds intervalles de temps dans la séquence d'émission du rayonnement. Pour cela, une synchronisation du fonctionnement du commutateur électrique 44 peut être commandée par le contrôleur d'émission 50. Ainsi, la chaîne d'analyse 51 peut être dédiée aux premiers intervalles de temps de durées individuelles Δt₁, et conçue pour déterminer l'absorption résiduelle de la zone de mesure en dehors de la bande spectrale d'absorption du composé chimique dont la quantité est à déterminer, et pour déterminer la distance d'éloignement de l'obstacle qui est situé en arrière-plan de cette zone de mesure. Indépendamment, la chaîne d'analyse 52 peut être dédiée aux seconds intervalles de temps de durées individuelles Δt₂, et conçue pour déterminer l'absorption de la zone de mesure dans la bande spectrale d'absorption du composé chimique. Un module de calcul, non-représenté, produit une évaluation de la quantité du composé chimique en fonction des niveaux d'absorption déterminés par les deux chaînes d'analyse 51 et 52, et de la distance d'éloignement de l'obstacle d'arrière-plan.

[Fig. 6c] montre une troisième architecture possible de voie de détection, dans laquelle deux capteurs optiques 41 et 42, notés DETECT. OPT. 1 et DETECT. OPT. 2, produisent séparément des signaux électriques de détection qui sont transmis séparément aux chaînes d'analyse 51 et 52. Un avantage de cette troisième architecture est la possibilité d'utiliser des capteurs optiques 41 et 42 dont les niveaux de sensibilité sont différents, et adaptés séparément aux valeurs respectives de puissance instantanée des parties utiles du rayonnement rétrodiffusé : P₁ dans les premiers intervalles de temps de durées individuelles Δt₁ pour le capteur 51, et P₂ dans les seconds intervalles de temps de durées individuelles Δt₂ pour le capteur 52. Dans ce cas, le rayonnement rétrodiffusé qui est collecté par l'optique d'entrée 40 est dirigé sur le capteur 41 ou sur le capteur 42 par un commutateur optique 45. Le fonctionnement de ce commutateur optique 45 est commandé par le contrôleur d'émission 50. Pour cette troisième architecture de voie de détection, le coupleur 35 de la voie d'émission peut être du type coupleur en Y à rapport de 50/50.

Les trois architectures de [Fig. 6a]-[Fig. 6c] pour la voie de détection sont compatibles chacune avec les variantes d'architecture de [Fig. 3a]-[Fig. 3e], [Fig. 4a]-[Fig. 4b] et [Fig. 5a]-[Fig. 5b] pour la voie d'émission.

Enfin, [Fig. 6d] montre une quatrième architecture possible de voie de détection, dans laquelle le commutateur optique 45 de [Fig. 6c] est remplacé par un séparateur de polarisation 46, noté SEP. POLAR., qui est basé sur les polarisations linéaires du rayonnement. Cette quatrième architecture pour la voie de détection est compatible avec les modes de réalisation pour la voie d'émission où le coupleur 35 est du type coupleur en polarisation, tel que décrit plus haut.

De façon générale, le capteur optique ou l'un au moins des capteurs optiques utilisés dans la voie de détection est à délai de réaction suffisamment court pour permettre d'estimer la distance d'éloignement de l'obstacle d'arrière-plan à partir du rayonnement émis pendant les durées Δt₁.

En outre, chaque chaîne d'analyse de la voie de détection peut être connectée en sortie à une unité de calcul (non-représentée), qui est adaptée pour fournir à partir de signaux produits par la ou les deux chaîne(s) d'analyse, des estimations de la distance d'éloignement de l'obstacle d'arrière-plan et de la quantité du composé chimique qui est présente dans la zone de mesure, intégrée sur le trajet des impulsions. Une telle unité de calcul peut éventuellement être intégrée au système LIDAR.

Il est entendu que l'invention peut être reproduite en modifiant des aspects secondaires des modes de réalisation qui ont été décrits en détail ci-dessus, tout en conservant certains au moins des avantages cités. Notamment, des composants optiques à fonctions équivalentes peuvent être utilisés à la place de ceux qui ont été mentionnés. En outre, les modifications suivantes sont mentionnées à titre d'exemples comme des alternatives disponibles pour l'Homme du métier sans activité inventive :
- une même source laser commutable en fréquence optique peut être utilisée pour produire les impulsions aux fréquences optiques v₁ et v₂ ;
- des amplificateurs optiques distincts peuvent être utilisés pour les impulsions à la fréquence optique v₁ et celles à la fréquence optique v₂ ;
- l'entrelacement des impulsions à la fréquence optique v₁ avec celles à la fréquence optique v₂ pour produire la séquence d'émission de rayonnement peut être effectué avant ou après l'application à chaque impulsion de la modulation de phase et/ou de la modulation d'intensité ; et
- l'entrelacement des impulsions à la fréquence optique v₁ avec celles à la fréquence optique v₂ pour produire la séquence d'émission de rayonnement peut être effectué avant ou après l'amplification optique des impulsions.
Enfin, toutes les valeurs numériques qui ont été citées ne l'ont été qu'à titre d'illustration, et peuvent être changées en fonction du composé chimique dont la quantité est à déterminer.

## Revendications

1. Système LIDAR, adapté pour effectuer des mesures d'absorption différentielle entre deux fréquences optiques (v₁, v₂) distinctes, et des mesures de distance d'éloignement d'un obstacle qui est présent en arrière-plan d'une zone de mesure où se produit l'absorption, le système LIDAR comprenant :
- un ensemble source laser, capable de produire des rayonnements à l'une et à l'autre des deux fréquences optiques (v₁, v₂) ;
**caractérisé par** :
- des moyens de modulation d'intensité, adaptés pour appliquer à chaque rayonnement une forme d'enveloppe d'impulsion, y compris une durée d'impulsion et une valeur de puissance optique d'impulsion (P₁, P₂) ; et
- un contrôleur d'émission (50), adapté pour commander les moyens de modulation d'intensité,
le système LIDAR étant adapté de sorte que, lors d'un fonctionnement du système LIDAR, ledit système LIDAR émette dans une direction-cible selon laquelle une mesure d'absorption différentielle et une mesure de la distance d'éloignement de l'obstacle d'arrière-plan sont à réaliser, une séquence d'émission de rayonnement qui comprend :
- des premiers intervalles de temps pendant lesquels l'émission de rayonnement est située spectralement à une première (v₁) des deux fréquences optiques, avec une première largeur spectrale (Δv₁), une première durée d'impulsion (Δt₁) et une première valeur de puissance optique d'impulsion (P₁) ; et
- des seconds intervalles de temps pendant lesquels l'émission de rayonnement est située spectralement à une seconde (v₂) des deux fréquences optiques, avec une seconde largeur spectrale (Δv₂), une seconde durée d'impulsion (Δt₂) et une seconde valeur de puissance optique d'impulsion (P₂),
les première (Δv₁) et seconde (Δv₂) largeurs spectrales étant telles que l'émission de rayonnement pendant les premiers intervalles de temps et pendant les seconds intervalles de temps corresponde à des intervalles spectraux qui sont disjoints, la première largeur spectrale étant supérieure à la seconde largeur spectrale,
la première valeur de puissance optique d'impulsion (P₁) est supérieure à la seconde valeur de puissance optique d'impulsion (P₂), et
la première durée d'impulsion (Δt₁) étant plus courte que la seconde durée d'impulsion (Δt₂),
le système LIDAR comprenant en outre une voie de détection qui est adaptée pour détecter, traiter et analyser indépendamment des rayonnements rétrodiffusés qui correspondent à la première fréquence optique (v₁) et à la seconde fréquence optique (v₂), et qui correspondent respectivement à des émissions pendant les premiers et seconds intervalles de temps.

2. Système LIDAR selon la revendication 1, comprenant en outre :
- des moyens d'élargissement spectral, agencés pour modifier une largeur spectrale de l'un au moins des rayonnements produits par l'ensemble source laser (10, 20).

3. Système LIDAR selon la revendication 1 ou 2, suivant lequel le contrôleur d'émission (50) est adapté pour commander l'ensemble source laser, les moyens de modulation d'intensité et éventuellement les moyens d'élargissement spectral de sorte que, dans la séquence d'émission de rayonnement, la première (v₁) des deux fréquences optiques soit associée exclusivement à la première largeur spectrale (Δv₁), à la première durée d'impulsion (Δt₁) et à la première valeur de puissance optique d'impulsion (P₁), à l'exclusion de la seconde largeur spectrale (Δv₂), de la seconde durée d'impulsion (Δt₂) et de la seconde valeur de puissance optique d'impulsion (P₂), au sein de premières impulsions (1) de rayonnement, et la seconde (v₂) des deux fréquences optiques soit associée exclusivement à la seconde largeur spectrale, à la seconde durée d'impulsion et à la seconde valeur de puissance optique d'impulsion, à l'exclusion de la première largeur spectrale, de la première durée d'impulsion et de la première valeur de puissance optique d'impulsion, au sein de secondes impulsions (2) de rayonnement qui sont séparées desdites premières impulsions.

4. Système LIDAR selon les revendications 2 et 3, dans lequel
l'ensemble source laser comprend un premier oscillateur laser (10) qui est adapté pour produire le rayonnement à la première fréquence optique (v₁), et un second oscillateur laser (20) qui est adapté pour produire le rayonnement à la seconde fréquence optique (v₂) avec la seconde largeur spectrale (Δv₂),
les moyens d'élargissement spectral comprennent un modulateur de phase (11) qui est disposé sur un trajet du rayonnement produit par le premier oscillateur laser (10), et qui est commandé par le contrôleur d'émission (50) pour procurer la première largeur spectrale (Δv₁) audit rayonnement laser produit par le premier oscillateur laser ; et
le système LIDAR comprend en outre un commutateur optique (30) qui est commandé par le contrôleur d'émission (50) pour transmettre soit le rayonnement issu du modulateur de phase (11) soit le rayonnement produit par le second oscillateur laser (20), à une portion aval de chemin optique d'émission qui est commune auxdits rayonnements issu du modulateur de phase et produit par le second oscillateur laser, ladite portion aval de chemin optique d'émission comprenant les moyens de modulation d'intensité (31).

5. Système LIDAR selon les revendications 2 et 3, dans lequel
l'ensemble source laser comprend un premier oscillateur laser (10) qui est adapté pour produire le rayonnement à la première fréquence optique (v₁), et un second oscillateur laser (20) qui est adapté pour produire le rayonnement à la seconde fréquence optique (v₂) avec la seconde largeur spectrale (Δv₂),
les moyens d'élargissement spectral comprennent un modulateur de phase (11) qui est disposé sur un trajet du rayonnement produit par le premier oscillateur laser (10), et qui est commandé par le contrôleur d'émission (50) pour procurer la première largeur spectrale (Δv₁) audit rayonnement produit par le premier oscillateur laser,
les moyens de modulation d'intensité comprennent un premier modulateur d'intensité (12) qui est disposé sur un trajet du rayonnement issu du modulateur de phase (11), et qui est commandé par le contrôleur d'émission (50) pour être efficace sur ledit rayonnement issu du modulateur de phase, et comprennent un second modulateur d'intensité (22) qui est disposé sur un trajet du rayonnement produit par le second oscillateur laser (20), et qui est commandé par le contrôleur d'émission pour être efficace sur ledit rayonnement produit par le second oscillateur laser,
et le système LIDAR comprend en outre un coupleur optique (35) adapté pour transmettre les rayonnements issus des premier (12) et second (22) modulateurs d'intensité à une portion aval de chemin optique d'émission qui est commune auxdits rayonnements issus des premier et second modulateurs d'intensité.

6. Système LIDAR selon la revendication 2, suivant lequel le contrôleur d'émission (50) est adapté pour commander l'ensemble source laser, les moyens d'élargissement spectral et les moyens de modulation d'intensité de sorte que la séquence d'émission de rayonnement comprenne une succession d'impulsions de rayonnement qui sont situées spectralement soit à la première (v₁) des deux fréquences optiques, soit à la seconde (v₂) des deux fréquences optiques, toutes les impulsions de rayonnement ayant la même forme d'enveloppe qui comprend, pour la première fréquence optique comme pour la seconde fréquence optique, la première durée (Δt₁) pendant laquelle l'émission de rayonnement possède la première largeur spectrale (Δv₁) et la première valeur de puissance optique d'impulsion (P₁), et une seconde durée (Δt₂) pendant laquelle l'émission de rayonnement possède la seconde largeur spectrale (Δv₂) et la seconde valeur de puissance optique d'impulsion (P₂), la première durée étant plus courte que la seconde durée, et étant antérieure ou postérieure à ladite seconde durée dans chaque impulsion de rayonnement.

7. Système LIDAR selon l'une quelconque des revendications précédentes, réalisé selon une technologie de fibres optiques.

8. Système LIDAR selon l'une quelconque des revendications précédentes, comprenant des moyens de polarisation (35) adaptés pour que les rayonnements qui sont émis en direction de la zone de mesure par ledit système LIDAR, aient des polarisations qui soient orthogonales, notamment des polarisations circulaires qui sont opposées, lorsque lesdits rayonnements sont émis pendant les premiers intervalles de temps ou les seconds intervalles de temps,
et la voie de détection comprend un séparateur de polarisation (46) qui est disposé pour transmettre les rayonnements rétrodiffusés, en fonction de polarisations desdits rayonnements rétrodiffusés, soit vers un premier détecteur (41) qui est sensible dans un premier intervalle spectral incluant la première fréquence optique (v₁) combinée avec la première largeur spectrale (Δv₁), soit vers un second détecteur (42) qui est sensible dans un second intervalle spectral incluant la seconde fréquence optique (v₂) combinée avec la seconde largeur spectrale (Δv₂).

9. Procédé de mesure par absorption différentielle, d'une quantité d'un composé chimique qui est présente dans une direction-cible, suivant lequel :
- un système LIDAR selon l'une quelconque des revendications précédentes, est utilisé, la première fréquence optique d'émission (v₁) étant destinée à être sélectionnée en dehors de bandes d'absorption du composé chimique, et la seconde fréquence optique d'émission (v₂) étant destinée à être sélectionnée dans une des bandes d'absorption de ce composé chimique ;
- le système LIDAR est orienté selon la direction-cible pour émettre du rayonnement selon la séquence d'émission de rayonnement vers une zone de mesure qui est susceptible de contenir le composé chimique, et un fonctionnement du système LIDAR est déclenché ;
- la distance d'éloignement de l'obstacle qui est présent en arrière-plan de la zone de mesure est estimée à partir du rayonnement rétrodiffusé qui est relatif à la première fréquence optique (v₁) et qui correspond à des émissions pendant les premiers intervalles de temps ; et
- la quantité du composé chimique qui est contenue dans la zone de mesure, intégrée sur un trajet des impulsions entre le système LIDAR et l'obstacle d'arrière-plan, est estimée à partir de valeurs d'intensité qui sont relatives séparément aux rayonnements rétrodiffusés à la première fréquence optique (v₁) et à la seconde fréquence optique (v₂), correspondant respectivement aux premiers et seconds intervalles de temps dans la séquence d'émission de rayonnement, lesdits rayonnements rétrodiffusés ayant été détectés par la voie de détection du système LIDAR.

10. Procédé selon la revendication 9, suivant lequel la distance d'éloignement de l'obstacle qui est présent en arrière-plan de la zone de mesure est estimée à partir d'un temps de vol qui est mesuré pour le rayonnement rétrodiffusé relatif à la première fréquence optique (v₁).

11. Procédé selon la revendication 10, suivant lequel la distance d'éloignement de l'obstacle qui est présent en arrière-plan de la zone de mesure, telle qu'estimée à partir du rayonnement rétrodiffusé qui est relatif à la première fréquence optique (v₁), est utilisée pour estimer la quantité du composé chimique qui est contenue dans la zone de mesure, en combinaison avec les valeurs d'intensité qui sont relatives séparément aux rayonnements rétrodiffusés et détectés à la première fréquence optique et à la seconde fréquence optique (v₂), et correspondant respectivement aux émissions pendant les premiers et seconds intervalles de temps.

12. Procédé selon l'une quelconque des revendications 9 à 11, suivant lequel le composé chimique est l'un parmi le dioxyde de carbone, le méthane, le protoxyde d'azote et l'eau.

13. Procédé selon l'une quelconque des revendications 9 à 12, suivant lequel le système LIDAR est installé à la surface de la Terre et dirigé pour mesurer la quantité du composé chimique qui est présente entre ledit système LIDAR et l'obstacle,
ou le système LIDAR est embarqué à bord d'un aéronef en vol et dirigé vers une zone géographique à la surface de la Terre, pour mesurer la distance d'éloignement de la surface de la Terre dans ladite zone géographique par rapport au système LIDAR, et pour mesurer la quantité du composé chimique qui est présente entre ledit système LIDAR et la surface de la Terre dans ladite zone géographique,
ou le système LIDAR est embarqué à bord d'un satellite en orbite autour de la Terre et dirigé vers une zone géographique à la surface de la Terre, pour mesurer la distance d'éloignement de la surface de la Terre dans ladite zone géographique par rapport au système LIDAR, et pour mesurer la quantité du composé chimique qui est présente entre ledit système LIDAR et la surface de la Terre ladite zone géographique.

## Patentansprüche

1. LIDAR-System, welches dazu ausgebildet ist, Messungen der differentiellen Absorption zwischen zwei verschiedenen optischen Frequenzen (v₁, v₂) durchzuführen sowie Messungen der Entfernung eines Hindernisses, das sich im Hintergrund eines Messbereichs befindet, in dem die Absorption auftritt, wobei das LIDAR-System Folgendes umfasst:
- eine Laserquellenanordnung, die in der Lage ist, Strahlung mit der einen oder der anderen der beiden optischen Frequenzen (v₁, v₂) zu erzeugen;
**gekennzeichnet durch**:
- Intensitätsmodulationsmittel, die dazu ausgebildet sind, auf jede Strahlung eine Impulshüllenform einschließlich einer Impulsdauer und eines optischen Impulsleistungswerts (P₁, P₂) anzuwenden; und
- einen Emissionsregler (50), der dazu ausgebildet ist, die Intensitätsmodulationsmittel zu steuern,
wobei das LIDAR-System derart ausgebildet ist, dass beim Betrieb des LIDAR-Systems das LIDAR-System in einer Zielrichtung, in der eine Messung der differentiellen Absorption und eine Messung der Entfernung des Hintergrundhindernisses durchgeführt werden soll, eine Sequenz von Strahlungsemissionen aussendet, die umfasst:
- erste Zeitintervalle, in denen die Strahlungsemission spektral zu einer ersten (v₁) der beiden optischen Frequenzen liegt, mit einer ersten Spektralbreite (Δv₁), einer ersten Impulsdauer (Δt₁) und einem ersten Wert der optischen Impulsleistung (P₁); und
- zweite Zeitintervalle, in denen die Strahlungsemission spektral zu einer zweiten (v₂) der beiden optischen Frequenzen liegt, mit einer zweiten Spektralbreite (Δv₂), einer zweiten Impulsdauer (Δt₂) und einem zweiten Wert der optischen Impulsleistung (P₂),
wobei die erste (Δv₁) und zweite (Δv₂) Spektralbreite derart sind, dass die Emission von Strahlung während der ersten Zeitintervalle und während der zweiten Zeitintervalle Spektralintervallen entspricht, die disjunkt sind, wobei die erste Spektralbreite größer als die zweite Spektralbreite ist,
wobei der erste Wert der optischen Impulsleistung (P₁) größer ist als der zweite Wert der optischen Impulsleistung (P₂), und
wobei die erste Impulsdauer (Δt₁) kürzer ist als die zweite Impulsdauer (Δt₂), wobei das LIDAR-System ferner einen Detektionsweg umfasst, der dazu ausgebildet ist, unabhängig Streustrahlung zu detektieren, zu verarbeiten und zu analysieren, die der ersten optischen Frequenz (v₁) und der zweiten optischen Frequenz (v₂) entspricht und die jeweils Emissionen während des ersten und zweiten Zeitintervalls entspricht.

2. LIDAR-System nach Anspruch 1, ferner umfassend:
- Mittel zur spektralen Verbreiterung, die dazu angeordnet sind, eine Spektralbreite wenigstens einer der von der Laserquellenanordnung (10, 20) erzeugten Strahlungen zu modifizieren.

3. LIDAR-System nach Anspruch 1 oder 2, gemäß dem der Emissionsregler (50) dazu ausgebildet ist, die Laserquellenanordnung, die Intensitätsmodulationsmittel und gegebenenfalls die Mittel zur Spektralverbreiterung derart zu steuern, dass in der Strahlungsemissionssequenz, die erste (v₁) der beiden optischen Frequenzen ausschließlich der ersten Spektralbreite (Δv₁), der ersten Impulsdauer (Δt₁) und dem ersten Wert der optischen Impulsleistung (P₁) zugeordnet ist, unter Ausschluss der zweiten Spektralbreite (Δv₂), der zweiten Impulsdauer (Δt₂) und des zweiten Wertes der optischen Impulsleistung (P₂), innerhalb erster Strahlungsimpulse (1), und die zweite (v₂) der beiden optischen Frequenzen ausschließlich der zweiten Spektralbreite, der zweiten Impulsdauer und dem zweiten Wert der optischen Impulsleistung zugeordnet ist, unter Ausschluss der ersten Spektralbreite, der ersten Impulsdauer und des ersten Wertes der optischen Impulsdauer, innerhalb von zweiten Strahlungsimpulsen (2), die von den ersten Impulsen getrennt sind.

4. LIDAR-System nach Anspruch 2 und 3, wobei die Laserquellenanordnung einen ersten Laseroszillator (10) umfasst, der zur Erzeugung von Strahlung bei der ersten optischen Frequenz (v₁) ausgebildet ist, und einen zweiten Laseroszillator (20) umfasst, der zur Erzeugung von Strahlung bei der zweiten optischen Frequenz (v₂) mit der zweiten Spektralbreite (Δv₂) ausgebildet ist, umfasst,
wobei die Mittel zur Spektralverbreiterung einen Phasenmodulator (11) umfassen, der auf einem Weg der vom ersten Laseroszillator (10) erzeugten Strahlung angeordnet ist und der vom Emissionsregler (50) gesteuert ist, um der vom ersten Laseroszillator erzeugten Strahlung die erste Spektralbreite (Δv₁) zu verleihen; und wobei das LIDAR-System ferner einen optischen Schalter (30) umfasst, der von dem Emissionsregler (50) gesteuert ist, um entweder die vom Phasenmodulator (11) stammende Strahlung oder die vom zweiten Laseroszillator (20) erzeugte Strahlung an einen stromabwärtigen Teil des optischen Emissionswegs weiterzuleiten, der der vom Phasenmodulator stammenden Strahlung und der vom zweiten Laseroszillator erzeugten Strahlung gemeinsam ist, wobei der stromabwärtige Teil des optischen Emissionswegs die Intensitätsmodulationsmittel (31) umfasst.

5. LIDAR-System nach Anspruch 2 und 3, wobei
die Laserquellenanordnung einen ersten Laseroszillator (10) umfasst, der zur Erzeugung von Strahlung bei der ersten optischen Frequenz (v₁) ausgebildet ist, und einen zweiten Laseroszillator (20) umfasst, der zur Erzeugung von Strahlung bei der zweiten optischen Frequenz (v₂) mit der zweiten Spektralbreite (Δv₂) ausgebildet ist, die Mittel zur Spektralverbreiterung einen Phasenmodulator (11) umfassen, der in einem Weg der vom ersten Laseroszillator (10) erzeugten Strahlung angeordnet ist und der vom Emissionsregler (50) gesteuert ist, um der vom ersten Laseroszillator erzeugten Strahlung die erste Spektralbreite (Δv₁) zu verleihen,
die Intensitätsmodulationsmittel einen ersten Intensitätsmodulator (12) umfassen, der auf einem Weg der von dem Phasenmodulator (11) stammenden Strahlung angeordnet ist und der durch den Emissionsregler (50) derart gesteuert wird, dass er für die von dem Phasenmodulator erzeugten Strahlung wirksam ist, und einen zweiten Intensitätsmodulator (22) umfassen, der auf einem Weg der aus dem zweiten Laseroszillator (20) stammenden Strahlung angeordnet ist und der durch den Emissionsregler derart gesteuert wird, dass er für die von dem zweiten Laseroszillator erzeugte Strahlung wirksam ist,
und das LIDAR-System umfasst ferner einen optischen Koppler (35), der dazu ausgebildet ist, die von dem ersten (12) und dem zweiten (22) Intensitätsmodulator stammende Strahlung an einen stromabwärts gelegenen Abschnitt des optischen Emissionswegs zu übertragen, der der von dem ersten und dem zweiten Intensitätsmodulator stammenden Strahlung gemeinsam ist.

6. LIDAR-System nach Anspruch 2, gemäß dem der Emissionsregler (50) dazu ausgebildet ist, die Laserquellenanordnung, die Spektralverbreiterungsmittel und die Intensitätsmodulationsmittel derart zu steuern, dass die Strahlungsemissionssequenz eine Folge von Strahlungsimpulsen umfasst, die entweder spektral zu der ersten (v₁) der beiden optischen Frequenzen, oder zu der zweiten (v₂) der beiden optischen Frequenzen liegen, wobei alle Strahlungsimpulse die gleiche Hüllenform aufweisen, die für die erste optische Frequenz wie für die zweite optische Frequenz, die erste Dauer (Δt₁) umfasst, während der die Strahlungsemission die erste Spektralbreite (Δv₁) und den ersten Wert der optischen Impulsleistung (P₁) besitzt, und eine zweite Dauer (Δt₂) umfasst, während der die Strahlungsemission die zweite Spektralbreite (Δv₂) und den zweiten Wert der optischen Impulsleistung (P₂) aufweist, wobei die erste Dauer kürzer als die zweite Dauer ist und in jedem Strahlungsimpuls vor oder nach der zweiten Dauer liegt.

7. LIDAR-System nach einem der vorhergehenden Ansprüche, welches mittels von Lichtwellenleitertechnologie hergestellt ist.

8. LIDAR-System nach einem der vorhergehenden Ansprüche, umfassend Polarisationsmittel (35), die derart ausgebildet sind, dass die von dem LIDAR-System in Richtung des Messbereichs ausgesandte Strahlung orthogonale Polarisierungen aufweist, insbesondere entgegengesetzte zirkulare Polarisierungen, aufweist, wenn die Strahlung während der ersten Zeitintervalle oder der zweiten Zeitintervalle emittiert wird,
und wobei der Detektionsweg einen Polarisationsseparator (46) umfasst, der dazu angeordnet ist, die rückgestreute Strahlung in Abhängigkeit von den Polarisationen der rückgestreuten Strahlung entweder zu einem ersten Detektor (41) zu übertragen, der in einem ersten Spektralbereich empfindlich ist, der die erste optische Frequenz (v₁) in Kombination mit der ersten Spektralbreite (Δv₁) umfasst, oder zu einem zweiten Detektor (42) zu übertragen, der in einem zweiten Spektralbereich empfindlich ist, der die zweite optische Frequenz (v₂) in Kombination mit der zweiten Spektralbreite (Δv₂) umfasst.

9. Verfahren zur Messung einer Menge einer chemischen Verbindung, die in einer Zielrichtung vorhanden ist, durch differentielle Absorption, gemäß dem gilt:
- Ein LIDAR-System nach einem der vorhergehenden Ansprüche wird verwendet, wobei die erste optische Emissionsfrequenz (v₁) dazu bestimmt ist, außerhalb von Absorptionsbanden der chemischen Verbindung ausgewählt zu werden, und die zweite optische Emissionsfrequenz (v₂) dazu bestimmt ist, in einem der Absorptionsbande dieser chemischen Verbindung ausgewählt zu werden;
- Das LIDAR-System wird in der Zielrichtung ausgerichtet, um Strahlung gemäß der Strahlungsemissionssequenz in Richtung eines Messbereichs auszusenden, der wahrscheinlich die chemische Verbindung enthält, und ein Betrieb des LIDAR-Systems wird ausgelöst;
- Die Entfernung des Hindernisses, das sich im Hintergrund des Messbereichs befindet, wird aus der Rückstreustrahlung geschätzt, die sich auf die erste optische Frequenz (v₁) bezieht und den Emissionen während der ersten Zeitintervalle entspricht; und
- die Menge der chemischen Verbindung, die in dem Messbereich enthalten ist, die in einen Impulsweg zwischen dem LIDAR-System und dem Hintergrundhindernis integriert ist, wird aus Intensitätswerten geschätzt, die sich getrennt auf die Streustrahlung der ersten optischen Frequenz (v₁) und der zweiten optischen Frequenz (v₂) beziehen, die jeweils entsprechen den ersten bzw. zweiten Zeitintervallen in der Strahlungsemissionssequenz entsprechen, wobei die rückgestreute Strahlung durch den Erfassungsweg des LIDAR-Systems erfasst wurde.

10. Verfahren nach Anspruch 9, gemäß dem die Entfernung des Hindernisses, das sich im Hintergrund des Messbereichs befindet, aus einer Flugzeit geschätzt wird, die für die Streustrahlung in Bezug auf die erste optische Frequenz (v₁) gemessen wird.

11. Verfahren nach Anspruch 10, gemäß dem die Entfernung des Hindernisses, das sich im Hintergrund des Messbereichs befindet, wie sie aus der Streustrahlung, die sich auf die erste optische Frequenz (v₁) bezieht, geschätzt wird, verwendet wird, um die Menge der chemischen Verbindung zu schätzen, die in dem Messbereich enthalten ist, in Kombination mit den Intensitätswerten, die sich getrennt auf die bei der ersten optischen Frequenz und der zweiten optischen Frequenz (v₂) detektierte Streustrahlung beziehen und jeweils den Emissionen während des ersten und zweiten Zeitintervalls entsprechen.

12. Verfahren nach einem der Ansprüche 9 bis 11, gemäß dem die chemische Verbindung eine aus Kohlendioxid, Methan, Distickstoffoxid und Wasser ist.

13. Verfahren nach einem der Ansprüche 9 bis 12, gemäß dem das LIDAR-System auf der Erdoberfläche installiert und so ausgerichtet wird, dass es die Menge der chemischen Verbindung misst, die zwischen dem LIDAR-System und dem Hindernis vorhanden ist,
oder das LIDAR-System an Bord eines Flugzeuges während des Fluges mitgeführt und auf ein geografisches Gebiet auf der Erdoberfläche ausgerichtet wird, um in diesem geografischen Gebiet die Entfernung der Erdoberfläche vom LIDAR-System zu messen und um die Menge der chemischen Verbindung zu messen, die sich zwischen dem LIDAR-System und der Erdoberfläche in diesem geografischen Gebiet befindet,
oder das LIDAR-System an Bord eines Satelliten ist, der die Erde umkreist und auf ein geographisches Gebiet auf der Erdoberfläche gerichtet ist, um die Entfernung der Erdoberfläche in dem geographischen Gebiet von dem LIDAR-System zu messen und um die Menge der chemischen Verbindung zu messen, die zwischen dem LIDAR-System und der Erdoberfläche in dem geographischen Gebiet vorhanden ist.

## Claims

1. A LIDAR system, adapted for performing differential absorption measurements between two distinct optical frequencies (v₁, v₂), and measurements of a separation distance from an obstacle which is present in a background of a measurement zone where the absorption occurs, the LIDAR system comprising:
- a laser source assembly, suitable for producing radiations at either of the two optical frequencies (v₁, v₂);
**characterized in that**:
- intensity modulation means, adapted for applying a pulse envelope shape to each radiation, including a pulse duration and a pulse optical power value (P₁, P₂); and
- an emission controller (50), adapted for controlling the intensity modulation means, the LIDAR system being adapted so that, during an operation of the LIDAR system, said LIDAR system emits, in a target direction in which a measurement of differential absorption and a measurement of the separation distance from the background obstacle are to be performed, a radiation emission sequence which comprises:
- first time intervals during which the radiation emission is spectrally located at a first (v₁) of the two optical frequencies, with a first spectral width (Δv₁), a first pulse duration (Δt₁), and a first pulse optical power value (P₁); and
- second time intervals during which the radiation emission is spectrally located at a second (v₂) of the two optical frequencies, with a second spectral width (Δv₂), a second pulse duration (Δt₂), and a second pulse optical power value (P₂),
the first (Δv₁) and second (Δv₂) spectral widths being such that the radiation emission during the first time intervals and during the second time intervals corresponds to spectral intervals which are disjoint, the first spectral width being greater than the second spectral width,
the first pulse optical power value (P₁) being greater than the second pulse optical power value (P₂), and
the first pulse duration (Δt₁) being shorter than the second pulse duration (Δt₂),
the LIDAR system further comprising a detection path which is adapted for independently detecting, processing, and analyzing backscattered radiations which correspond to the first optical frequency (v₁) and to the second optical frequency (v₂), and which respectively correspond to emissions during the first and second time intervals.

2. The LIDAR system according to claim 1, further comprising:
- spectral broadening means, arranged to modify a spectral width of at least one of the radiations produced by the laser source assembly (10, 20).

3. The LIDAR system according to claim 1 or 2, wherein the emission controller (50) is adapted for controlling the laser source assembly, the intensity modulation means, and optionally the spectral broadening means, so that, in the radiation emission sequence, the first (v₁) of the two optical frequencies is associated exclusively with the first spectral width (Δv₁), the first pulse duration (Δt₁), and the first pulse optical power value (P₁), excluding the second spectral width (Δv₂), the second pulse duration (Δt₂), and the second pulse optical power value (P₂), within first radiation pulses (1), and the second (v₂) of the two optical frequencies is associated exclusively with the second spectral width, the second pulse duration, and the second pulse optical power value, excluding the first spectral width, the first pulse duration, and the first pulse optical power value, within second radiation pulses (2) which are separate from said first pulses.

4. The LIDAR system according to claims 2 and 3, wherein
the laser source assembly comprises a first laser oscillator (10) which is adapted for producing the radiation at the first optical frequency (v₁), and a second laser oscillator (20) which is suitable for producing the radiation at the second optical frequency (v₂) with the second spectral width (Δv₂),
the spectral broadening means comprise a phase modulator (11) which is arranged in a path of the radiation produced by the first laser oscillator (10), and which is controlled by the emission controller (50) to provide the first width spectral (Δv₁) to said laser radiation produced by the first laser oscillator; and
the LIDAR system further comprises an optical switch (30) which is controlled by the emission controller (50) to transmit either the radiation originating from the phase modulator (11) or the radiation produced by the second laser oscillator (20), to an emission optical path downstream portion which is shared by said radiations originating from the phase modulator and produced by the second laser oscillator, said emission optical path downstream portion comprising the intensity modulation means (31).

5. The LIDAR system according to claims 2 and 3, wherein
the laser source assembly comprises a first laser oscillator (10) which is adapted for producing the radiation at the first optical frequency (v₁), and a second laser oscillator (20) which is adapted for producing the radiation at the second optical frequency (v₂) with the second spectral width (Δv₂),
the spectral broadening means comprises a phase modulator (11) which is arranged in a path of the radiation produced by the first laser oscillator (10), and which is controlled by the emission controller (50) to provide the first spectral width (Δv₁) to said radiation produced by the first laser oscillator,
the intensity modulation means comprise a first intensity modulator (12) which is arranged in a path of the radiation originating from the phase modulator (11), and which is controlled by the emission controller (50) to be effective on said radiation originating from the phase modulator, and comprise a second intensity modulator (22) which is arranged in a path of the radiation produced by the second laser oscillator (20), and which is controlled by the emission controller to be effective on said radiation produced by the second laser oscillator, and the LIDAR system further comprises an optical coupler (35) adapted for transmitting the radiations originating from the first (12) and second (22) intensity modulators to an emission optical path downstream portion which is shared by said radiations originating from the first and second intensity modulators.

6. The LIDAR system according to claim 2, wherein the emission controller (50) is adapted for controlling the laser source assembly, the spectral broadening mean, and the intensity modulation means, so that the radiation emission sequence comprises a succession of radiation pulses which are spectrally located either at the first (v₁) of the two optical frequencies, or at the second (v₂) of the two optical frequencies, all the radiation pulses having the same envelope shape which comprises, for the first optical frequency as for the second optical frequency, the first duration (Δt₁) during which the radiation emission has the first spectral width (Δv₁) and the first pulse optical power value (P₁), and a second duration (Δt₂) during which the radiation emission has the second spectral width (Δv₂) and the second pulse optical power value (P₂), the first duration being shorter than the second duration, and being before or after said second duration in each radiation pulse.

7. The LIDAR system according to any one of the preceding claims, implementing an optical fiber technology.

8. The LIDAR system according to any one of the preceding claims, comprising polarization means (35) adapted so that the radiations emitted toward the measurement zone by said LIDAR system have polarizations which are orthogonal, in particular circular polarizations which are opposite, when said radiations are emitted during the first time intervals or the second time intervals,
and the detection path comprises a polarizing beamsplitter (46) which is arranged to transmit the backscattered radiations, as a function of the polarizations of said backscattered radiations, either to a first detector (41) which is sensitive in a first spectral interval including the first optical frequency (v₁) combined with the first spectral width (Δv₁), or to a second detector (42) which is sensitive in a second spectral interval including the second optical frequency (v₂) combined with the second spectral width (Δv₂).

9. A method for measuring through differential absorption, an amount of a chemical compound which is present in a target direction, wherein:
- a LIDAR system in accordance with any one of the preceding claims is used, the first emission optical frequency (v₁) being intended to be selected outside absorption bands of the chemical compound, and the second emission optical frequency (v₂) being intended to be selected within one of the absorption bands of this chemical compound;
- the LIDAR system is oriented in the target direction in order to emit radiation according to the radiation emission sequence towards a measurement zone which is likely to contain the chemical compound, and an operation of the LIDAR system is triggered;
- the separation distance from the obstacle which is present in the background of the measurement zone is estimated based on the backscattered radiation relating to the first optical frequency (v₁) and which corresponds to emissions during the first time intervals; and
- the amount of the chemical compound which is contained in the measurement zone, integrated over a path of the pulses between the LIDAR system and the background obstacle, is estimated based on intensity values relating separately to the backscattered radiations at the first optical frequency (v₁) and at the second optical frequency (v₂), respectively corresponding to the first and second time intervals in the radiation emission sequence, said backscattered radiations having been detected by the detection path of the LIDAR system.

10. The method according to claim 9, wherein the separation distance from the obstacle which is present in the background of the measurement zone is estimated based on a time-of-flight which is measured for the backscattered radiation relating to the first optical frequency (v₁).

11. The method according to claim 10, wherein the separation distance from the obstacle which is present in the background of the measurement zone, as estimated based on the backscattered radiation relating to the first optical frequency (v₁), is used to estimate the amount of the chemical compound which is contained in the measurement zone, in combination with the intensity values separately relating to the radiations backscattered and detected at the first optical frequency and at the second optical frequency (v₂), and respectively corresponding to the emissions during the first and second time intervals.

12. The method according to any one of claims 9 to 11, wherein the chemical compound is any among carbon dioxide, methane, nitrous oxide, and water.

13. The method according to any one of claims 9 to 12, wherein the LIDAR system is installed at the surface of the Earth and directed to measure the amount of the chemical compound which is present between said LIDAR system and the obstacle,
or the LIDAR system is on board an aircraft in flight, and directed towards a geographical area at the surface of the Earth, to measure the separation distance from the surface of the Earth in said geographical area and relative to the LIDAR system, and to measure the amount of the chemical compound which is present between said LIDAR system and the surface of the Earth in said geographical area,
or the LIDAR system is on board a satellite in orbit around the Earth and directed towards a geographical area at the surface of the Earth, to measure the separation distance from the surface of the Earth in said geographical area and relative to the LIDAR system, and to measure the amount of the chemical compound which is present between said LIDAR system and the surface of the Earth in said geographical area.
